(19) Europäisches Patentamt / European Patent Office / Office européen des brevets

(11) **EP 4 203 298 B1**

(12) **FASCICULE DE BREVET EUROPEEN**

(45) Date de publication et mention
de la délivrance du brevet:
**12.11.2025 Bulletin 2025/46**

(21) Numéro de dépôt: **22214427.1**

(22) Date de dépôt: **19.12.2022**

(51) Classification Internationale des Brevets (IPC):
*H02P 11/06* (2006.01)   *H02J 3/08* (2006.01)
*H02J 3/32* (2006.01)   *H02J 7/35* (2006.01)

(52) Classification Coopérative des Brevets (CPC):
**H02P 11/06; H02J 3/32; H02J 7/35;** H02J 2300/22;
Y02E 10/56

(54) **SYNCHRONISATION ENTRE MINI-RESEAUX**

SYNCHRONISATION ZWISCHEN MININETZEN

SYNCHRONIZATION BETWEEN MINI-NETWORKS

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **23.12.2021 FR 2114440**

(43) Date de publication de la demande:
**28.06.2023 Bulletin 2023/26**

(73) Titulaire: **Sagemcom Energy & Telecom SAS
92270 Bois-Colombes (FR)**

(72) Inventeurs:
• **BOUKHARI, Kevin
92270 BOIS-COLOMBES (FR)**
• **ALNEJAILI, Tareq
92270 BOIS-COLOMBES (FR)**

(74) Mandataire: **Cabinet Boettcher
5, rue de Vienne
75008 Paris (FR)**

(56) Documents cités:
**EP-A1- 3 726 698    WO-A1-2017/004125
CN-A- 106 549 414    US-A1- 2011 267 854**

• **SUSHIL THALE ET AL: "A smart control strategy
for the black start of a microgrid based on PV and
other auxiliary sources under islanded
condition", PHOTOVOLTAIC SPECIALISTS
CONFERENCE (PVSC), 2011 37TH IEEE, IEEE, 19
June 2011 (2011-06-19), pages 2454 - 2459,
XP032168187, ISBN: 978-1-4244-9966-3, DOI:
10.1109/PVSC.2011.6186443**

**Description**

L'invention concerne le domaine des mini-réseaux électriques, plus communément appelés « mini-grids ».

ARRIERE PLAN DE L'INVENTION

On assiste aujourd'hui, dans certains pays où le taux d'ensoleillement est important et où le réseau électrique traditionnel n'est pas accessible sur l'ensemble du territoire, au développement de « mini-grids », que l'on peut traduire par « mini-réseaux électriques ».

Les mini-grids sont de petites centrales électriques alimentant des réseaux de distribution locaux de faible puissance desservant des agglomérations spécifiques (comprenant typiquement entre quelques dizaines à quelques milliers d'abonnés), qui peuvent être hors réseau ou interconnectées au réseau central.

Les mini-grids sont généralement déployés dans les zones rurales avec une densité de population plus élevée pour fournir une alimentation alternative fiable. Un mini-grid comporte classiquement un ou des champs solaires photovoltaïques (comprenant chacun plusieurs panneaux photovoltaïques connectés en série et en parallèle), une ou des batteries pour stocker l'énergie électrique produite à partir de l'énergie solaire, et un ou des convertisseurs de puissance destinés à convertir l'énergie électrique pour produire une alimentation alternative sous une tension adaptée au réseau. Certains mini-grids dits « hybrides » intègrent en outre un groupe électrogène. Le groupe électrogène est notamment utilisé la nuit, lorsque la charge des batteries à la tombée du jour est insuffisante pour subvenir aux besoins des abonnés pendant la nuit.

L'interconnexion des mini-grids isolés permet d'améliorer de manière importante les performances, la fiabilité et la disponibilité de ces mini-grids. Les mini-grids peuvent ainsi échanger de l'énergie, de sorte qu'un mini-grid, disposant d'un surplus d'énergie, peut alimenter un mini-grid qui a un déficit énergétique. Le surplus d'énergie d'un mini-grid peut par exemple être utilisé pour charger la batterie d'un autre mini-grid. On optimise de la sorte la durée de vie des batteries et l'exploitation de l'énergie globalement disponible sur le réseau, et on limite donc les délestages ainsi que l'utilisation des groupes électrogènes dont le fonctionnement nécessite du carburant et est donc très coûteux.

Cependant, la connexion sur un même bus AC de différentes sources de tension nécessite impérativement que ces dernières soient parfaitement synchronisées en fréquence et en tension, sous peine de voir circuler, dans les câbles de puissance les reliant, des sur-courants importants pouvant endommager les matériels et faire déclencher les protections.

De même, l'ajout d'une source de puissance externe sur un réseau, telle qu'un onduleur photovoltaïque, un réseau de puissance externe (par exemple un réseau public), ou un groupe électrogène, nécessite une synchronisation fine.

Il est ainsi relativement aisé de connecter un onduleur photovoltaïque de quelques dizaines de kilowatts à un réseau public, car le réseau public transporte une grande quantité de puissance. Par exemple, dans le cas de la connexion d'un onduleur photovoltaïque de 30kW à un réseau public de 60GW, la puissance sur le réseau public peut être considérée comme « infinie » par rapport à celle fournie par l'onduleur photovoltaïque : si, théoriquement, l'apport de 30 kW a bien un effet, cet effet a peu de chances d'être perceptible sur le réseau de 60 GW.

Par contre, la connexion d'un onduleur photovoltaïque à un mini-grid nécessite un contrôle plus complexe que dans le cas du réseau public, car la puissance transférée par le mini-grid est très faible par rapport au réseau public. Par exemple, dans le cas de la connexion d'un onduleur photovoltaïque de 30kW à un mini-grid de 120kW, l'onduleur photovoltaïque aura un effet important sur le mini-grid et il risque de perturber son fonctionnement.

Or, la synchronisation, sur un même mini-grid, de convertisseurs de puissance associés à des énergies renouvelables intermittentes, et du stockage d'énergie, est une problématique complexe.

Une méthode connue pour synchroniser entre eux des convertisseurs de puissance utilise une stratégie « master/slave ». Cette méthode nécessite l'échange en « temps réel » des informations de fréquence et de tension entre le convertisseur maître et ses esclaves sur un bus filaire de communication (de type CAN ou RS485). Une liaison de communication rapide est en effet nécessaire pour gérer rapidement le flux de puissance.

Cette méthode pose notamment le problème suivant. Comme les convertisseurs sont éloignés les uns des autres, il est nécessaire d'utiliser de très longs câbles de communication pour les connecter entre eux. Or, de tels câbles sont bien évidemment très coûteux et complexes à installer.

Les documents WO 2017/004125 A1,CN 106 549 414 A et SUSHIL THALE ET AL: "A smart control strategy for the black start of a microgrid based on PV and other auxiliary sources under islanded condition",PHOTOVOLTAIC SPECIALISTS CONFERENCE (PVSC), 2011 37TH IEEE, IEEE, 19 juin 2011 (2011-06-19), pages 2454-2459 décrivent un procédé d'îlotage d'une pluralité de convertisseurs de puissance connectés au réseau électrique.

OBJET DE L'INVENTION

L'invention a pour objet de synchroniser et de connecter entre eux plusieurs mini-grids éloignés les uns des autres, de manière à obtenir un réseau global robuste, et sans nécessiter de câbles de communication de longueur importante.

RESUME DE L'INVENTION

En vue de la réalisation de ce but, on propose un procédé de synchronisation maître, mis en œuvre par un groupe de convertisseurs maître appartenant à un système de convertisseurs qui comporte une pluralité de groupes de convertisseurs comprenant le groupe de convertisseurs maître et des groupes de convertisseurs esclaves, chaque groupe de convertisseurs comprenant un ou des convertisseurs regroupés localement, chaque convertisseur étant connecté à au moins un panneau photovoltaïque et à au moins une batterie pour alimenter au moins un abonné,

le groupe de convertisseurs maître comprenant au moins une sortie connectée à un réseau central, chaque groupe de convertisseurs esclaves comprenant au moins une entrée connectée audit réseau central,
le procédé de synchronisation maître comprenant les étapes nominales de :

- mesurer un état de charge global maître représentatif des états de charge des batteries connectées aux convertisseurs du groupe de convertisseurs maître ;
- régler dynamiquement une fréquence centrale du réseau central en fonction de l'état de charge global maître, de manière à commander chaque convertisseur de chaque groupe de convertisseurs esclave pour que ledit convertisseur produise une puissance de sortie qui est fonction de la fréquence centrale.

Le groupe de convertisseurs maître synchronise donc tous les groupes de convertisseurs en réglant la fréquence centrale du réseau central auquel sont connectés tous les groupes de convertisseurs. Chaque convertisseur de chaque groupe de convertisseurs esclave produit une puissance de sortie qui est fonction de la fréquence centrale. Ainsi, le groupe de convertisseurs maître utilise ce réglage de la fréquence centrale comme un moyen de commander et de synchroniser dynamiquement les convertisseurs des groupes de convertisseurs esclaves.

Cette méthode de synchronisation est particulièrement astucieuse et permet de réaliser la synchronisation entre des groupes de convertisseurs possiblement très éloignés les uns des autres, sans nécessiter de moyens de communication dédiés entre lesdits groupes de convertisseurs.

On propose de plus un procédé de synchronisation maître tel que précédemment décrit, dans lequel la fréquence centrale fcentral_grid est telle que :

$$\text{fcentral\_grid} = \text{ai} * \text{SOC}_{\text{Cluster}_{\text{master}}} + \text{bi},$$

où :

$\text{SOC}_{\text{Cluster}_{\text{master}}}$ est l'état de charge global maître, et où ai et bi sont des premiers coefficients qui dépendent de l'état de charge global maître.

On propose de plus un procédé de synchronisation maître tel que précédemment décrit, dans lequel l'état de charge global maître est compris dans un intervalle d'états de charge prédéfini courant parmi une pluralité d'intervalles d'états de charge prédéfinis, chaque intervalle d'états de charge prédéfini étant associé à des valeurs constantes des premiers coefficients ai et bi.

On propose de plus un procédé de synchronisation maître tel que précédemment décrit, dans lequel les premiers coefficients ai et bi sont remis à jour à intervalle de temps régulier en fonction de données météorologiques.

On propose de plus un procédé de synchronisation maître tel que précédemment décrit, dans lequel les étapes nominales sont réalisées par un convertisseur maître global appartenant au groupe de convertisseurs maître.

On propose de plus un procédé de synchronisation maître tel que précédemment décrit, dans lequel les étapes nominales comprennent en outre l'étape, si l'état de charge global maître est inférieur ou égal à un seuil minimal prédéfini, de déconnecter du réseau central les convertisseurs du groupe de convertisseurs maître.

On propose de plus un procédé de synchronisation maître tel que précédemment décrit, dans lequel le groupe de convertisseurs maître est agencé pour mettre en œuvre un algorithme de contrôle global défini en fonction d'au moins un paramètre de configuration, représentatif d'une configuration de connexion dans laquelle se trouve le système de convertisseurs et qui dépend d'au moins une source de puissance externe susceptible d'être connectée au groupe de convertisseurs maître, et d'un type de ladite source de puissance externe, l'algorithme de contrôle global comprenant les étapes nominales.

On propose de plus un procédé de synchronisation maître tel que précédemment décrit, dans lequel les sources de puissance externes comprennent un réseau de puissance externe et/ou un groupe électrogène et/ou un onduleur photovoltaïque.

On propose de plus un convertisseur comprenant une unité de traitement dans laquelle est mis en œuvre le procédé de synchronisation maître tel que précédemment décrit.

On propose de plus un programme d'ordinateur comprenant des instructions qui conduisent l'unité de traitement du convertisseur tel que précédemment décrit à exécuter les étapes du procédé de synchronisation maître tel que précédemment décrit.

On propose de plus un support d'enregistrement lisible par ordinateur, sur lequel est enregistré le programme d'ordinateur tel que précédemment décrit.

On propose de plus un procédé de synchronisation esclave, mis en œuvre par un convertisseur donné d'un groupe de convertisseurs esclave appartenant à un système de convertisseurs qui comporte une pluralité de groupes de convertisseurs comprenant un groupe de convertisseurs maître et ledit groupe de convertisseurs esclave, chaque groupe de convertisseurs comprenant un ou des convertisseurs regroupés localement, chaque convertisseur étant connecté à au moins un panneau photovoltaïque et à au moins une batterie pour alimenter au moins un abonné,

le groupe de convertisseurs maître comprenant au moins une sortie connectée à un réseau central, le convertisseur donné comprenant au moins une entrée connectée audit réseau central,
le procédé de synchronisation esclave comprenant les étapes de :

- mesurer une fréquence centrale du réseau central ;
- produire une puissance de sortie qui est fonction de la fréquence centrale.

On propose de plus un procédé de synchronisation esclave tel que précédemment décrit, dans lequel la puissance de sortie est aussi fonction d'un état de charge local de la batterie connectée audit convertisseur donné.

On propose de plus un procédé de synchronisation esclave tel que précédemment décrit, dans lequel la puissance de sortie $P\_SGC\_unit$ est une fonction polynomiale de l'état de charge local de la batterie connectée audit convertisseur donné, ayant des coefficients qui dépendent de la fréquence centrale.

On propose de plus un procédé de synchronisation esclave tel que précédemment décrit, dans lequel la puissance de sortie $P\_SGC\_unit$ est telle que :

$$P\_SGC\_unit = P_1 * SOC_{slave}{}^2 + P_2 * SOC_{slave} + P_3$$

où :
$SOC_{slave}$ est l'état de charge local du convertisseur donné, et où $P_1$, $P_2$, $P_3$ dépendent de la fréquence centrale.

On propose de plus un procédé de synchronisation esclave tel que précédemment décrit, dans lequel on a :

$$P_1 = c1 * fcentral_{grid} + d1$$

$$P_2 = c2 * fcentral\_grid + d2$$

$$P_3 = c3 * fcentral\_grid + d3$$

où :
$c1$, $c2$, $c3$, $d1$ $d2$, $d3$ sont des deuxièmes coefficients et où $fcentral_{grid}$ est la fréquence centrale.

On propose de plus un procédé de synchronisation esclave tel que précédemment décrit, dans lequel les deuxièmes coefficients $c1$, $c2$, $c3$, $d1$, $d2$, $d3$ sont remis à jour à intervalle de temps régulier en fonction de données météorologiques.

On propose de plus un convertisseur comprenant une unité de traitement dans laquelle est mis en œuvre le procédé de synchronisation esclave tel que précédemment décrit.

On propose de plus un programme d'ordinateur comprenant des instructions qui conduisent l'unité de traitement du convertisseur tel que précédemment décrit à exécuter les étapes du procédé de synchronisation esclave tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés parmi lesquels :

[Fig. 1] la figure 1 représente un convertisseur (SGC) ;

[Fig. 2] la figure 2 représente un groupe de convertisseurs ;

[Fig. 3] la figure 3 représente un système de convertisseurs comprenant un groupe de convertisseurs maître et des groupes de convertisseurs esclaves ;

[Fig. 4] la figure 4 représente les paramètres échangés au sein d'un convertisseur ;

[Fig. 5] la figure 5 représente les étapes d'un algorithme de sélection générale ;

[Fig. 6] la figure 6 représente les étapes d'un algorithme de de protection ;

[Fig. 7] la figure 7 représente les étapes d'un algorithme de synchronisation ;

[Fig. 8] la figure 8 représente les étapes d'un algorithme de détection d'un groupe électrogène ;

[Fig. 9] la figure 9 représente les étapes d'un algorithme de calcul de l'état de charge global d'un groupe de convertisseurs ;

[Fig. 10] la figure 10 représente un graphique comprenant une courbe de la fréquence du réseau central en fonction de l'état de charge global maître ;

[Fig. 11] la figure 11 représente un graphique comprenant une courbe de la puissance de sortie d'un convertisseur d'un groupe de convertisseurs esclave, en fonction de l'état de charge de la batterie connectée audit convertisseur, pour une fréquence de 51Hz ;

[Fig. 12] la figure 12 est une figure similaire à celle de la figure 11, pour une fréquence de 50 Hz ;

[Fig. 13] la figure 13 est une figure similaire à celle de la figure 11, pour une fréquence de 49 Hz ;

[Fig. 14] la figure 14 est une figure similaire à celle de la figure 11, pour une fréquence de 47 Hz ;

[Fig. 15] la figure 15 représente les étapes d'un algorithme de configuration générale, pour un convertisseur dans le mode de fonctionnement isolé ;

[Fig. 16] la figure 16 représente les étapes d'un algorithme de contrôle avec priorité au solaire et injection sur le réseau ;

[Fig. 17] la figure 17 représente les étapes d'un algorithme de contrôle avec connexion au réseau public ;

[Fig. 18] la figure 18 représente les étapes d'un algorithme de contrôle avec absence de connexion ;

[Fig. 19] la figure 19 représente les paramètres échangés au sein d'un groupe de convertisseurs ;

[Fig. 20] la figure 20 représente les étapes d'un algorithme de configuration générale, pour le mode de fonctionnement en groupe ;

[Fig. 21] la figure 21 représente les étapes d'un algorithme de contrôle pour groupe isolé ;

[Fig. 22] la figure 22 représente les étapes d'un algorithme de contrôle avec priorité à la connexion à un réseau public ;

[Fig. 23] la figure 23 représente les étapes d'un algorithme de contrôle avec connexion avec un groupe électrogène ;

[Fig. 24] la figure 24 représente les étapes d'un algorithme de contrôle avec priorité au solaire avec connexion à un réseau public ;

[Fig. 25] la figure 25 représente les étapes d'un algorithme de contrôle du convertisseur esclave de groupe ;

[Fig. 26] la figure 26 représente une architecture comprenant plusieurs groupes de convertisseurs ;

[Fig. 27] la figure 27 représente les étapes d'un algorithme de configuration générale, pour le mode de fonctionnement en multi-groupes ;

[Fig. 28] la figure 28 représente les étapes d'un algorithme de contrôle de multi-groupes isolé ;

[Fig. 29] la figure 29 représente les étapes d'un algorithme de contrôle de multi-groupes avec connexion à un réseau public ;

[Fig. 30] la figure 30 représente les étapes d'un algorithme de contrôle de multi-groupes avec connexion à un réseau public avec priorité au solaire ;

[Fig. 31] la figure 31 représente les étapes d'un algorithme de contrôle de multi-groupes avec connexion à un groupe électrogène ;

[Fig. 32] la figure 32 représente les étapes d'un algorithme de contrôle de multi-groupes avec connexion à un groupe électrogène et/ou un réseau public ;

[Fig. 33] la figure 33 représente les étapes d'un algorithme de contrôle local mis en œuvre par un convertisseur maître local ;

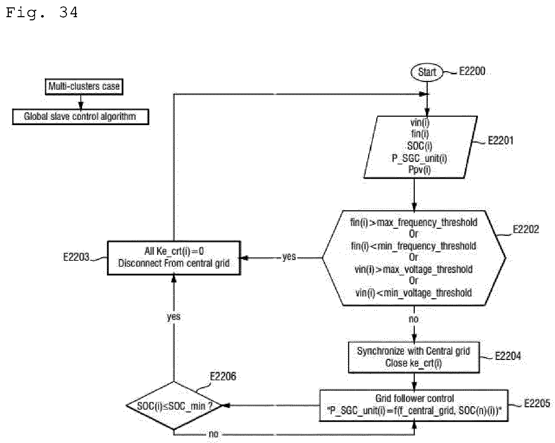

[Fig. 34] la figure 34 représente les étapes d'un algorithme de contrôle esclave mis en œuvre par un convertisseur esclave.

DESCRIPTION DETAILLEE DE L'INVENTION

L'invention est ici mise en œuvre dans un système de convertisseurs.

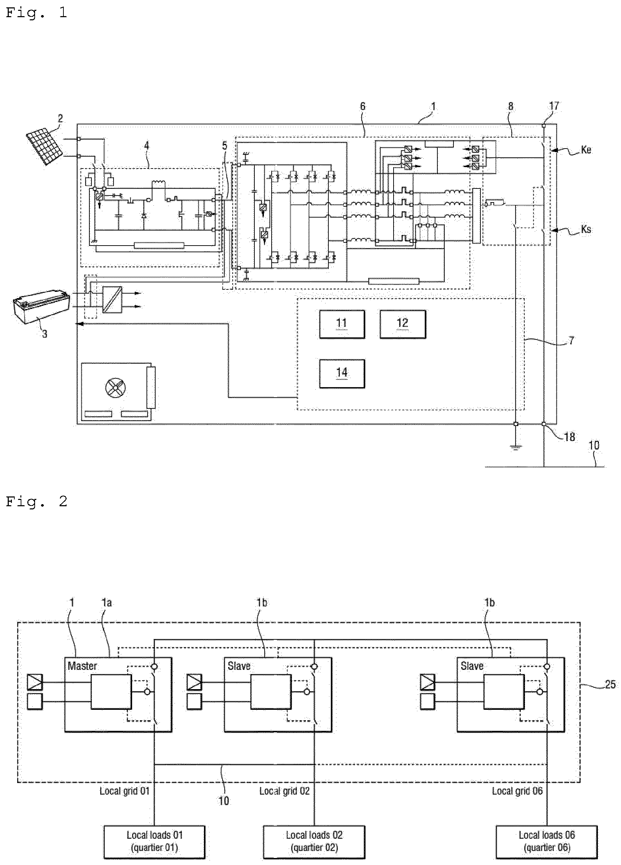

En référence à la figure 1, chaque convertisseur est ici semblable au convertisseur 1, qui est appelé « SGC » (pour « Smart Grid Converter »). Le convertisseur 1 appartient à un mini-grid qui comprend, outre le convertisseur 1, au moins un champ photovoltaïque comprenant chacun un ou plusieurs panneaux photovoltaïques 2 connectés en série et en parallèle et au moins une batterie 3, auxquels est relié le convertisseur 1 en opération.

La batterie 3 est une batterie haute tension destinée à stocker de l'énergie qui est utilisée par exemple pour alimenter les abonnés la nuit.

Le convertisseur 1 est un convertisseur hybride.

Le convertisseur 1 comporte une unité de conversion DC-DC 4, un bus DC 5, une unité de conversion DC-AC 6, une unité de traitement 7 et une cellule de protection 8.

L'unité de conversion DC-DC 4 comprend ici un hacheur solaire.

L'unité de conversion DC-DC 4 génère donc un courant continu sous une tension continue, qui est appliquée sur le bus DC 5, qui est ici un bus 600-900V (couplage DC).

La tension continue est appliquée en entrée de l'unité de conversion DC-AC 6. L'unité de conversion DC-AC 6 comprend un onduleur réversible à deux niveaux. Le premier niveau comprend des composants semi-conducteurs de type SiC (carbure de silicium).

L'unité de conversion DC-AC 6 génère une tension de sortie alternative qui est appliquée sur un bus de puissance AC 10 auxquels des abonnés sont connectés.

L'unité de traitement 7 est une unité électronique et logicielle, qui comprend une ou plusieurs cartes électriques et un certain nombre de composants.

Parmi ces composants, on trouve un ou des composants de traitement 11, qui comprennent par exemple un microcontrôleur, un processeur classique, un GPU (pour *Graphics Processing Unit,* que l'on peut traduire par « processeur graphique »), un DSP (pour *Digital Signal Processor,* que l'on peut traduire par « processeur de signal numérique »), ou bien un circuit logique programmable tel qu'un FPGA (pour *Field Programmable Gate Arrays*) ou un ASIC (pour *Application Specific Integrated Circuit*).

L'unité de traitement 7 comprend aussi au moins une mémoire 12 reliée aux composants de traitement 11 et permettant notamment de stocker les instructions de programmes. En particulier, la mémoire forme un support d'enregistrement lisible par ordinateur, sur lequel est enregistré un programme d'ordinateur comprenant des instructions qui conduisent l'unité de traitement 7 à exécuter les étapes du procédé de synchronisation selon l'invention (procédé de synchronisation maître ou esclave).

L'unité de traitement 7 pilote l'unité de conversion DC-DC 4 pour mettre en œuvre une régulation MPPT (pour *« Maximum Power Point Tracking »*) et une gestion du stockage d'énergie dans la batterie 3.

L'unité de traitement 7 comporte aussi des moyens de communication filaires 14 (par exemple RS485 et/ou CAN et/ou Ethernet), qui permettent notamment à un utilisateur de communiquer avec le convertisseur 1, ou bien à des convertisseurs d'un même groupe de convertisseurs de communiquer entre eux.

Le convertisseur 1 comprend de plus une entrée 17 et une sortie 18.

Comme on le verra plus bas, en fonction du type de groupe de convertisseurs auquel appartient le convertisseur 1, l'entrée 17 peut être connectée à une source de puissance externe (par exemple à un réseau de puissance externe tel qu'un réseau public, ou à un groupe électrogène), ou bien à un réseau central.

Par « source de puissance externe », on entend une source qui n'appartient pas au système de convertisseurs (et qui n'est ni un convertisseur 1, ni un panneau solaire, ni une batterie).

De même, la sortie 18 peut être connectée au bus de puissance AC 10, mais aussi au réseau central.

La cellule de protection 8 permet de protéger le convertisseur 1 de défauts susceptibles de provenir de son entrée 17 ou de sa sortie 18.

Le convertisseur 1 comprend de plus un contacteur d'entrée Ke, permettant de sélectivement connecter ou déconnecter le cœur du convertisseur de son entrée 17, et un contacteur de sortie Ks, permettant de sélectivement connecter ou déconnecter le cœur du convertisseur de sa sortie 18. Le contacteur d'entrée Ke et le contacteur de sortie Ks sont pilotés par l'unité de traitement 7.

Le système de convertisseurs, dans lequel est mis en œuvre l'invention, comprend donc une pluralité de convertisseurs semblables au convertisseur 1.

Ces convertisseurs 1 appartiennent à une pluralité de mini-grids, qui sont soit très proches, soit distants de plusieurs kilomètres voire même de plusieurs dizaines de kilomètres.

Certains des convertisseurs 1 sont donc très proches les uns des autres (quelques mètres ou dizaines de mètres): ils alimentent par exemple des abonnés qui appartiennent à un même village, ou bien à un même quartier. Chaque convertisseur 1 peut créer indépendamment son réseau local et alimenter un quartier, ou bien il peut se synchroniser avec d'autres convertisseurs 1 pour partager des charges locales.

L'invention permet de synchroniser et de connecter à distance plusieurs groupes de convertisseurs (ou *clusters*), chaque groupe de convertisseurs comprenant un ou des convertisseurs 1 regroupés localement.

Par « regroupés localement », on entend que chaque groupe de convertisseurs comprend un ou des convertisseurs séparés les uns des autres d'une distance inférieure à un seuil de distance prédéfini, de l'ordre par exemple de la dizaine ou de la centaine de mètres.

Ici, par exemple, en référence à la figure 2, chaque groupe de convertisseurs 25 comprend six convertisseurs 1 qui sont donc connectés localement.

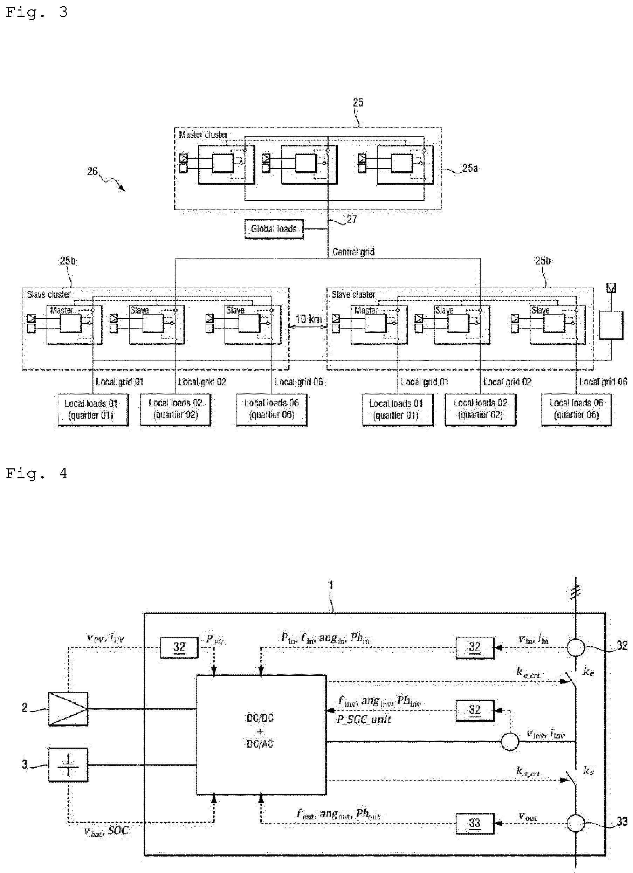

En référence à la figure 3, le système de convertisseurs 26 comporte par exemple trois groupes de convertisseurs 25, espacés par exemple de 10km.

Les groupes de convertisseurs comprennent un groupe de convertisseurs maître 25a et des groupes de convertisseurs esclaves 25b (deux en l'occurrence).

Le groupe de convertisseurs maître 25a comprend au moins une sortie connectée à un réseau central 27 ; ici, la sortie 18 de chaque convertisseur 1 du groupe de convertisseurs maître 25a est connectée au réseau central 27. Le réseau central 27 comprend au moins un bus de puissance AC qui relie entre eux tous les groupes de convertisseurs 25.

De même, chaque groupe de convertisseurs esclave 25b comprend au moins une entrée connectée audit réseau central ; ici, l'entrée 17 de chaque convertisseur 1 de chaque groupe de convertisseurs esclave 25b est connectée au réseau central 27.

Un groupe de générateurs diesel (groupe électrogène) et/ou un réseau de puissance externe (réseau public), et un ou des onduleurs photovoltaïques, peuvent aussi être connectés au système de convertisseurs. La connexion de ces sources de puissance externes améliore la disponibilité du « mini-grid » résultant.

Le groupe de générateurs maître règle dynamiquement la fréquence centrale du réseau centrale en fonction de son état de charge global maître, qui est représentatif des états de charge des batteries connectées aux convertisseurs du groupe de convertisseurs maître. Chaque convertisseur de chaque groupe de convertisseurs esclave produit alors une puissance de sortie qui est fonction de la fréquence centrale. Le réglage de la fréquence centrale permet donc de synchroniser les groupes de convertisseurs et les échanges de puissance, sans nécessiter de moyens de communication dédiés.

L'invention permet l'expansion future du système électrique pour répondre aux futurs besoins énergétiques des consommateurs locaux en minimisant les coûts d'installation, puisque des convertisseurs supplémentaires pourront être rajoutés aisément dans chaque groupe de convertisseurs, pour répondre aux nouvelles demandes énergétiques.

La synchronisation qui est mise en œuvre ne nécessite pas de moyens de communication dédiés : les groupes de convertisseurs n'ont pas besoin d'être connectés par un bus filaire dédié aux communications, ni par des moyens de communication radiofréquences.

L'échange d'énergie entre les groupes de convertisseurs sera régulé en fonction de la fréquence et de la tension définies par le groupe de convertisseurs maître (sans lien de communication), que sauront lire les groupes de convertisseurs esclaves pour adapter leur comportement : par exemple, si le groupe de convertisseurs maître se trouve en phase de réserve d'énergie décroissante (son ensemble de batterie voyant son état de charge global maître diminuer vers des seuils critiques), le groupe de convertisseurs maître adaptera la fréquence centrale (diminution < 50Hz) pour signaler aux groupes de convertisseurs esclaves soit de diminuer la charge de leur propre batterie, soit de réinjecter de l'énergie vers le réseau central, soit de se déconnecter du réseau central pour alimenter son propre mini-grid. Cette décision est prise par chaque groupe de convertisseurs esclave en fonction notamment de leur état de charge global esclave, représentatif des états de charge de leurs propres batteries, et de la consommation de leurs charges. Les excursions de fréquence imposées par le groupe de convertisseurs maître devront être également compatibles avec les stratégies classiques de « contrôle par décalage de fréquence » des onduleurs photovoltaïques qui pourront être présents sur le réseau central.

Si un groupe électrogène est connecté sur le réseau central et qu'il y a un surplus de puissance, le groupe de convertisseurs maître activera la fonction de protection contre le courant inverse (via la cellule de synchronisation) et il déconnectera le groupe électrogène.

On fournit ci-dessous une nomenclature des sigles utilisés dans la suite de cette description, ainsi qu'une liste de paramètres et leur définition :

| *Nomenclature* | **Définition** |
|---|---|
| SGC | 'Smart grid converter' |
| GE | Générateur diesel |
| MPPT | 'Max power point tracking' |
| PV | Photovoltaïque |

(suite)

| Nomenclature | Définition |
|---|---|
| AC | 'Alternative current' |
| DC | 'Direst current' |

| Paramètre | Définition |
|---|---|
| SOC_max | Le seuil maximum de l'état de charge de la batterie |
| SOC_min | Le seuil minimum de l'état de charge de la batterie |
| SOC_SEC | Le seuil de sécurité de l'état de charge de la batterie |
| GE_power_min | Le seuil de puissance minimum du GE |
| Vbat_inverse | La tension de la batterie qui permet d'activer la protection de puissance inverse de la batterie |
| f_grid_min | La fréquence minimale acceptée du réseau public ou d'un GE pour autoriser la synchronisation |
| f_grid_max | La fréquence maximale acceptée du réseau public ou d'un GE pour autoriser la synchronisation |
| v_grid_min | La tension minimale acceptée du réseau public ou d'un GE pour autoriser la synchronisation |
| v_grid_max | La tension maximale acceptée du réseau public ou d'un GE pour autoriser la synchronisation |
| Inverse_flow_protection_limit | Une constante permet d'activer la protection contre les inversions de courant de la batterie |
| Voltage_synchronization_limit | La limite de tension entre la tension du cluster et la tension d'entrée (GE ou réseau public) |
| Frequency_synchronization_limit | La limite de fréquence entre la tension du cluster et la tension d'entrée (GE ou réseau public) |
| Phase_ang_synchronization_limit | La limite de l'angle de phase entre la tension du cluster et la tension d'entrée (GE ou réseau public) |

| Nom de variable | Définition |
|---|---|
| SOC($i$) | L'état de charge de la batterie |
| SOC_cluster($i$) | L'état de charge du cluster |
| Pbat($i$) | La puissance de la batterie |
| Ppv($i$) | La puissance du champ photovoltaïque |
| P_SGC_unit($i$) | La puissance du SGC |
| Pref($i$) | La référence de puissance qui peut être injectée ou absorbée par l'unité SGC |
| Pin($i$) | Le flux de puissance qui traverse de cellule de synchronisation d'entrée |
| Pin_ex($i$) | Le flux de puissance qui traverse de cellule de synchronisation externe |
| Pself_consumption($i$) | L'autoconsommation du SGC |
| ks_crt($i$) | La commande du contacteur de sortie $ks$ |
| ke_crt($i$) | La commande du contacteur d'entrée $ke$ |
| ks_extern_ert($i$) | La commande du contacteur externe $ks\_externe$ |
| k_contact_GE($i$) | Le contrôle du contact sec du GE |
| GE_prsence($i$) | Paramètre indiquer la présence d'un GE |

(suite)

| Nom de variable | Définition |
|---|---|
| $v\_ac\_bus(i)$ | La tension de sortie du cluster |
| $Vbat(i)$ | La tension de la batterie |
| $Vinv(i)$ | La tension de sortie du SGC (mode onduleur) |
| $Vin(i)$ | La tension à l'entrée du SGC |
| $Vout(i)$ | La tension à la sortie du SGC |
| $angin(i)$ | L'angle de phase de la tension à l'entrée du SGC |
| $angout(i)$ | L'angle de phase de la tension à la sortie du SGC |
| $Phin(i)$ | La séquence de phase de la tension à l'entrée du SGC |
| $Phout(i)$ | La séquence de phase de la tension à la sortie du SGC |
| $fin(i)$ | La fréquence à l'entrée du SGC |
| $fout(i)$ | La fréquence à La sortie du SGC |

L'invention permet de gérer les différentes sources de puissance, et permet aussi aux différents mini-grids d'interagir entre eux et d'interagir avec les différentes sources de puissance externes : réseau public, groupe électrogène, un onduleur photovoltaïque, etc.

En référence à la figure 4, chaque convertisseur 1 utilise ses capteurs d'entrée 32 et ses capteurs de sortie 33 pour acquérir les paramètres relatifs à son fonctionnement et pour contrôler les différentes configurations de puissance.

Chaque convertisseur 1 du système de convertisseurs 26 peut fonctionner selon trois modes de fonctionnement distincts. Ces modes sont les suivants :

- mode isolé : le convertisseur 1 n'est pas relié à d'autres convertisseurs ;
- mode de fonctionnement en groupe : le convertisseur 1 est relié à d'autres convertisseurs au sein d'un groupe de convertisseurs 25, ledit groupe n'étant pas relié à d'autres groupes ;
- mode de fonctionnement en multi-groupes : le convertisseur est relié à d'autres convertisseurs au sein d'un groupe de convertisseurs, ledit groupe étant relié à d'autres groupes.

L'invention concerne principalement la mise en œuvre du mode de fonctionnement en multi-groupes.

Par ailleurs, comme on l'a vu, il y a deux types de groupes de convertisseurs dans le système de convertisseurs 26 : le groupe de convertisseur maître 25a et les groupes de convertisseurs esclaves 25b.

Il y a aussi un convertisseur maître 1a au sein de chaque groupe de convertisseurs 25.

En mode de fonctionnement en groupe, on parlera de « convertisseur maître de groupe » pour désigner le convertisseur maître.

En mode de fonctionnement en multi-groupes, on parlera de « convertisseur maître local » pour les groupes de convertisseurs esclaves, et de « convertisseur maître global » pour le groupe de convertisseurs maître.

Dans un groupe de convertisseurs, les convertisseurs autres que le convertisseur maître sont des convertisseurs esclaves.

Il y a deux types de convertisseur esclave : le « convertisseur esclave de groupe », dans le mode de fonctionnement en groupe, et le « convertisseur esclave local », dans le mode de fonctionnement en multi-groupes.

Le système de convertisseurs 26 est synchronisé via un procédé de synchronisation maître, qui est mis en œuvre dans le groupe de convertisseurs maître 25a et, plus précisément, dans le convertisseur maître global, et par un procédé de synchronisation esclave, qui est mis en œuvre dans tous les convertisseurs de tous les groupes de convertisseurs esclaves 25b.

Chaque convertisseur intègre un même logiciel, qui lui permet de réaliser les deux procédés de synchronisation. C'est l'utilisateur qui configure chaque convertisseur individuellement pour que chaque convertisseur connaisse le procédé de synchronisation (maître ou esclave) qu'il doit mettre en œuvre.

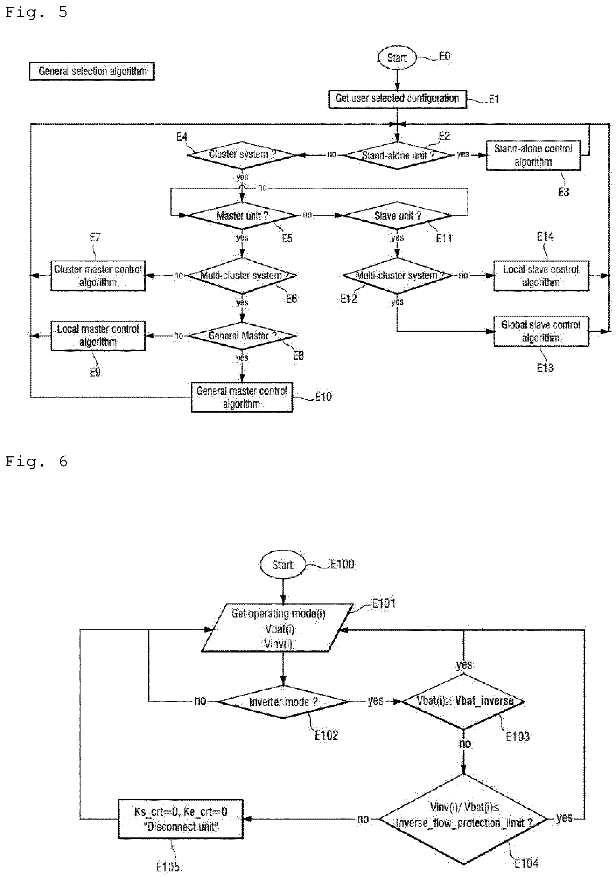

Chaque convertisseur et chaque groupe de convertisseurs sont configurés par un algorithme de sélection général, visible sur la figure 5, qui permet à l'utilisateur de définir pour chaque convertisseur le mode de fonctionnement souhaité et de configurer les rôles des convertisseurs et des groupes de convertisseurs.

L'algorithme de sélection général est mis en œuvre lors de la première installation du système de convertisseurs - et lors de chaque installation d'un nouveau convertisseur ou groupe de convertisseurs (pour le nouveau convertisseur ou nouveau groupe de convertisseurs).

L'algorithme de sélection général est donc mis en œuvre pour chaque convertisseur.

Suite à une étape de départ (étape E0), le convertisseur acquiert un ou des paramètres de configuration représentatifs du mode de fonctionnement qui a été renseigné par l'utilisateur (étape E1).

Le convertisseur vérifie s'il doit fonctionner dans le mode de fonctionnement isolé (étape E2). Si c'est le cas, l'algorithme de contrôle du mode de fonctionnement isolé est mis en œuvre (étape E3). L'algorithme repasse à l'étape E2.

Si ce n'est pas le cas, le convertisseur vérifie s'il doit fonctionner dans le mode de fonctionnement en groupe (étape E4).

Si c'est le cas, le convertisseur vérifie s'il est un convertisseur maître (étape E5).

Si c'est le cas, le convertisseur vérifie s'il doit fonctionner dans le mode de fonctionnement en multi-groupes (étape E6).

Si ce n'est pas le cas, le convertisseur est un convertisseur maître de groupe et l'algorithme de contrôle de convertisseur de maître de groupe est mis en œuvre (étape E7). L'algorithme repasse à l'étape E2.

Si c'est le cas, le convertisseur vérifie si le groupe auquel il appartient est le groupe de convertisseurs maître (étape E8). Si ce n'est pas le cas, le convertisseur est un convertisseur maître local et l'algorithme de contrôle de convertisseur de maître local est mis en œuvre (étape E9). L'algorithme repasse à l'étape E2. Si c'est le cas, le convertisseur est un convertisseur maître global et l'algorithme de contrôle de convertisseur de maître global est mis en œuvre (étape E10). L'algorithme repasse à l'étape E2.

A l'étape E5, si le convertisseur n'est pas un convertisseur maître, il vérifie s'il est bien un convertisseur esclave (étape E11). Si ce n'est pas le cas, l'algorithme repasse à l'étape E5. Si c'est le cas, le convertisseur vérifie s'il doit fonctionner en mode de fonctionnement multi-groupes (étape E12). Si ce n'est pas le cas, le convertisseur est un convertisseur esclave local, et l'algorithme de contrôle d'esclave de groupe est mis en œuvre (étape E13). L'algorithme repasse à l'étape E2. Si ce n'est pas le cas, le convertisseur est un convertisseur esclave global, et l'algorithme de contrôle d'esclave global (étape E14) est mis en œuvre. L'algorithme repasse à l'étape E2.

Après avoir sélectionné le mode de fonctionnement souhaité, l'algorithme de gestion de puissance correspondant sera lancé.

On présente maintenant les différents algorithmes de gestion de puissance.

On commence cette présentation par des fonctions générales, qui sont utilisées par les différents algorithmes de gestion.

On décrit tout d'abord un algorithme de protection, qui permet de mettre en œuvre une fonction de protection contre les courants inverses.

Lors le convertisseur fonctionne en mode onduleur (c'est-à-dire qu'il produit de l'énergie AC et la distribue) et que l'état de charge de sa batterie est très faible et que la tension sur le bus AC est élevée, un courant inverse peut circuler du bus AC vers la batterie à travers les diodes parasites des transistors. Ce courant peut endommager le convertisseur. La fonction de protection permet de protéger le convertisseur contre ce courant inverse.

L'algorithme, visible sur la figure 6, débute par une étape de départ (E100).

Le convertisseur acquiert le mode opérationnel courant du convertisseur ainsi que Vbat(i) et Vinv(i) (étape E101).

Le mode opérationnel peut être soit le mode onduleur (le convertisseur produit de la puissance) soit le mode redresseur (le convertisseur absorbe de la puissance pour recharger sa batterie).

Le convertisseur vérifie alors si le mode de fonctionnement courant est le mode onduleur (étape E102). Si ce n'est pas le cas, l'algorithme repasse à l'étape E101. Si c'est le cas, le convertisseur vérifie si :

$$\text{Vbat}(i) \geq \text{Vbat\_inverse} \quad \texttt{(étape E103)}.$$

Si c'est le cas, l'algorithme repasse à l'étape E101.

Si ce n'est pas le cas, le convertisseur vérifie si

$$\text{Vin}(i)/\text{Vbat}(i) \leq \text{inverse\_flow\_protection\_limit} \quad \texttt{(étape E104)}.$$

Si c'est le cas, l'algorithme repasse à l'étape E101.

Si ce n'est pas le cas, le convertisseur détecte un courant inverse trop élevé et déconnecte totalement le convertisseur (d'une possible source externe et du bus AC 10) en ouvrant le contacteur d'entrée Ke et le contacteur de sortie Ks :

$$\text{Ks\_crt} = 0, \text{Ke\_crt} = 0 \quad \texttt{(étape E106)}.$$

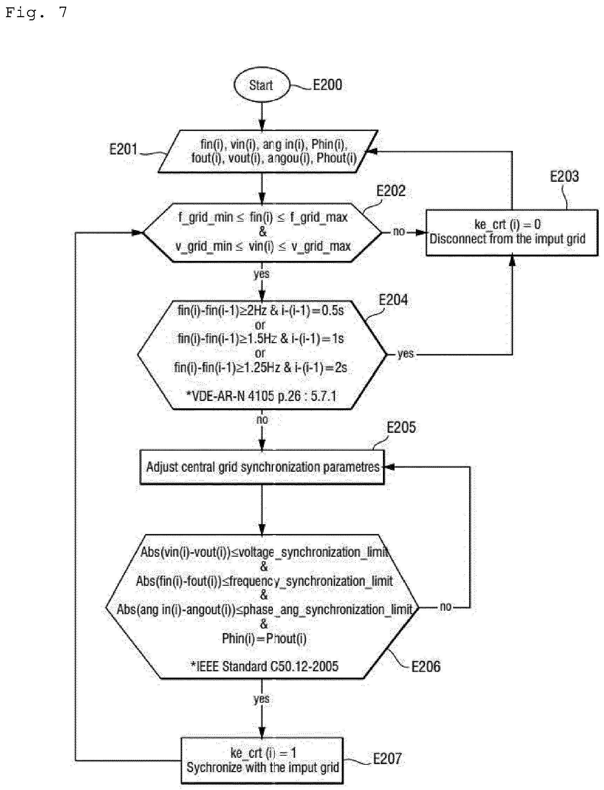

On décrit maintenant, en référence à la figure 7, un algorithme de synchronisation. Cet algorithme permet à chaque convertisseur de se synchroniser avec un réseau public ou avec un groupe électrogène, en assurant que les conditions nécessaires sont réunies pour une synchronisation sûre et efficace.

L'algorithme est donc mis en œuvre par chaque convertisseur 1 de chaque groupe de convertisseurs 25.

L'algorithme débute par une étape de départ (étape E200).

Le convertisseur 1 acquiert un certain nombre de paramètre (étape E201) : voir figure 7.

Le convertisseur vérifie alors si :

$$\text{f\_grid\_min} \leq \text{fin(i)} \leq \text{f\_grid\_max}$$

et

$$\text{v\_grid\_min} \leq \text{vin(i)} \leq \text{v\_grid\_max} \quad \texttt{(étape E202).}$$

Si ce n'est pas le cas, le convertisseur 1 ouvre le contacteur d'entrée Ke et se déconnecte du réseau public ou du groupe électrogène (étape E203) :

$$\text{ke\_crt(i)} = 0.$$

Si c'est le cas, le convertisseur 1 vérifie si :

$$\text{fin(i)} - \text{fin(i} - 1) \geq 2\text{Hz} \quad \texttt{et} \quad \text{i} - (\text{i} - 1) = 0{,}5\text{s}$$

ou

$$\text{fin(i)} - \text{fin(i} - 1) \geq 1{,}5\text{Hz} \quad \texttt{et} \quad \text{i} - (\text{i} - 1) = 1\text{s}$$

ou

$$\text{fin(i)} - \text{fin(i} - 1) \geq 1{,}25\text{Hz} \quad \texttt{et} \quad \text{i} - (\text{i} - 1) = 2\text{s} \quad \texttt{(étape E204).}$$

Cette condition est conforme à la norme VDE-AR-N 4105 p.26 : 5.7.1.

Si c'est le cas, l'algorithme passe à l'étape E203.

Si ce n'est pas le cas, le convertisseur 1 ajuste ses paramètres avec ceux du réseau public 29 ou du groupe électrogène 28 (étape E205).

Le convertisseur 1 vérifie alors si :

$$\text{Abs}\,(\text{vin(i)} - \text{vout(i)}) \leq \text{voltage\_synchronization\_limit}$$

et

$$\text{Abs}\,(\text{fin(i)} - \text{fout(i)}) \leq \text{frequency\_synchronization\_limit}$$

et

$$\text{Abs}\,(\text{angin(i)} - \text{angout(i)}) \leq \text{phase\_ang\_synchronization\_limit}$$

et

$$\text{Phin(i)} = \text{Phout(i)} \quad \texttt{(étape E206).}$$

Cette condition est conforme à la norme IEEE Standard CSO.12-2005.

Si ce n'est pas le cas, l'algorithme repasse à l'étape E205.

Si c'est le cas, le convertisseur 1 ferme le contacteur d'entrée Ke :

$$ke\_crt(i) = 1$$

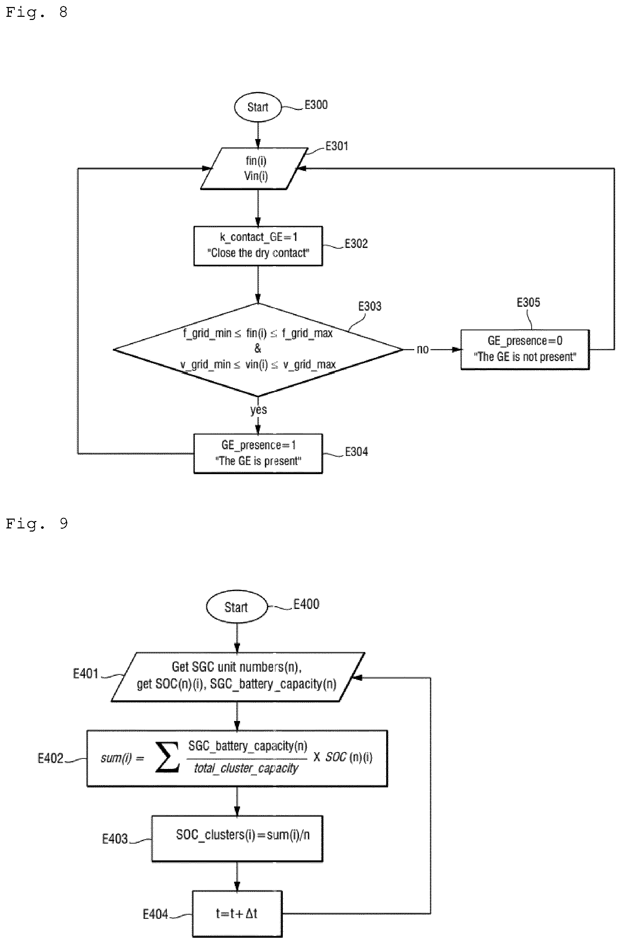

Le convertisseur se synchronise avec le réseau public ou le groupe électrogène (étape E207).
Pour vérifier la présence d'un groupe électrogène, chaque convertisseur met en œuvre l'algorithme de détection, visible sur la figure 8, qui consiste à fermer un contact sec et à tester la tension et la fréquence du groupe électrogène.
L'algorithme débute par une étape de départ (E300).
Le convertisseur acquiert fin(i) et v(i) : étape E301.
Le contact sec est fermé :

$$k\_contact\_GE = 1 \quad (\text{étape E302}).$$

Le convertisseur vérifie alors si :

$$f\_grid\_min \leq fin(i) \leq f\_grid\_max$$

et

$$v\_grid\_min \leq vin(i) \leq v\_grid\_max \quad (\text{étape E303}).$$

Si c'est le cas, le convertisseur détecte la présence du groupe électrogène (GE_presence = 1) - étape E304, et l'algorithme repasse à l'étape E301.
Si ce n'est pas le cas, le convertisseur ne détecte pas la présence du groupe électrogène (GE_presence = 0) - étape E305, et l'algorithme repasse à l'étape E301.
On décrit maintenant, en référence à la figure 9, l'algorithme de calcul de l'état de charge global de chaque groupe de convertisseurs.
L'objectif principal de cette fonction est de calculer l'état de charge moyen des batteries 3 du groupe de convertisseurs 25 en fonction de l'état de charge réel et de la capacité de chaque batterie. L'état de charge global est un état de charge pondéré en fonction des capacités de chaque batterie. Bien sûr, c'est en utilisant cet algorithme que l'état de charge global maître, représentatif des états de charge des batteries connectées aux convertisseurs du groupe de convertisseurs maître, est calculé.
L'algorithme débute par une étape de départ (E400).
Le convertisseur maître local d'un groupe de convertisseurs acquiert les numéros de tous les convertisseurs du groupe de convertisseurs, leurs états de charge et la capacité des batteries :

$$SGC \text{ unit numbers}(n), \; SOC(n)(i), \; SGC\_battery\_capacity(n) \quad (\text{étape } E401).$$

Le convertisseur calcule alors :

$$sum(i) = \sum \frac{SGC\_battery\_capacity(n)}{total\_cluster\_capacity} x \, SOC(n)(i) \quad (\text{étape E402}).$$

Puis, le convertisseur 1 calcule l'état de charge global du groupe de convertisseurs :

$$SOC\_cluster(i) = sum(i)/n \quad (\text{étape E403}).$$

Le temps t est alors incrémenté :

$$t = t + \Delta t \quad (\text{étape E404}).$$

L'algorithme repasse à l'étape E401.
On s'intéresse maintenant au réglage de la fréquence centrale du réseau central. La fréquence centrale est la fréquence de la tension présente sur le réseau central.

C'est le groupe de convertisseurs maître et, plus précisément, le convertisseur maître global, qui règle la fréquence centrale.

Le convertisseur maître global règle la fréquence centrale du réseau central en fonction de l'état de charge global maître.

La fréquence centrale fcentral_grid est telle que :

$$\text{fcentral\_grid} = ai * SOC_{Cluster_{master}} + bi,$$

où :

$SOC_{Cluster_{master}}$ est l'état de charge global maître, et où ai et bi sont des coefficients qui dépendent de l'état de charge global maître.

L'état de charge global maître est compris en permanence dans un intervalle d'états de charge prédéfini courant parmi une pluralité d'intervalles d'états de charge prédéfinis, chaque intervalle d'états de charge prédéfini étant associé à des valeurs constantes des coefficients ai et bi.

Les intervalles d'états de charge prédéfinis sont ici : [10, 50[ ; [50, 70[ ; [70, 100]. Les bornes des intervalles sont des SOC en %.

Plus précisément, on a :

$$\text{if } SOC_{Cluster\_master} = [10,50[$$

$$\text{fcentral\_grid} = a1 * SOC_{Cluster_{master}} + b1$$

$$\text{if } SOC_{Cluster\_master} = [50,70[$$

$$\text{fcentral\_grid} = a2 * SOC_{Cluster_{master}} + b2$$

$$\text{if } SOC_{Cluster\_master} = [70,100]$$

$$\text{fcentral\_grid} = a3 * SOC_{Cluster_{master}} + b3$$

De même, la puissance de sortie de chaque convertisseur de chaque groupe de convertisseurs esclave est définie en fonction de la fréquence centrale, et dépend aussi d'un état de charge local dudit convertisseur. L'état de charge local est l'état de charge de la ou des batteries connectées audit convertisseur.

La puissance de sortie P_SGC_unit du convertisseur esclave est telle que :

$$\text{P\_SGC\_unit} = P_1 * SOC_{slave}{}^2 + P_2 * SOC_{slave} + P_3$$

où :

$SOC_{slave}$ est l'état de charge local dudit convertisseur esclave, et où $P_1$, $P_2$, $P_3$ dépendent de la fréquence centrale.

Plus précisément, on a :

$$P_1 = c1 * \text{fcentral}_{grid} + d1$$

$$P_2 = c2 * \text{fcentral\_grid} + d2$$

$$P_3 = c3 * \text{fcentral\_grid} + d3$$

Cette puissance peut être fournie par n'importe quel convertisseur de chaque groupe de convertisseurs esclave, et peut être mesurée à la sortie de chaque convertisseur (directement après le filtre de sortie, par une somme algébrique de puissance au niveau de Ke et Ks).

Des exemples de valeurs de coefficients utilisées pour ces lois sont donnés dans le tableau récapitulatif suivant :

| a1 | 0.0734 |
|----|--------|
| b1 | 46.194 |
| a2 | -3.4034$e$ - 16 |
| b2 | 50 |
| a3 | 0.065 |
| b3 | 45.35 |
| c1 | 5.9888$e$ - 05 |
| d1 | -0.0029292 |
| c2 | -0.0067848 |
| d2 | 0.34341 |
| c3 | -0.12873 |
| d3 | 5.7748 |

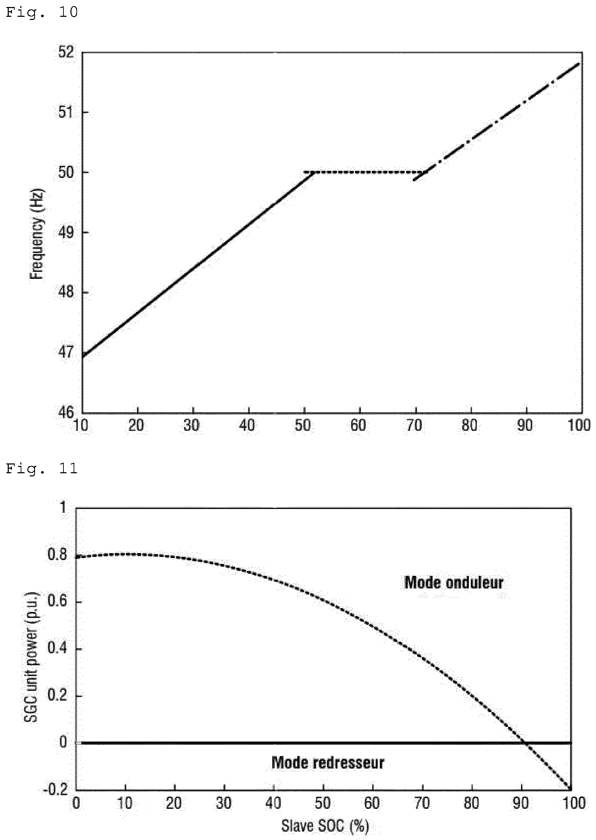

On voit sur la figure 10 la fréquence centrale du réseau central en fonction de l'état de charge global maître. On distingue deux portions linéaires (pentes positives) et un palier entre les deux portions linéaires.

On voit sur la figure 11 la puissance de sortie d'un convertisseur donné d'un groupe de convertisseurs esclave, en fonction de son état de charge local, pour une fréquence centrale de 51 Hz. Le convertisseur donné fonctionne en mode onduleur (il produit de l'énergie) jusqu'à environ 91% de SOC, puis passe en mode redresseur (il absorbe de l'énergie).

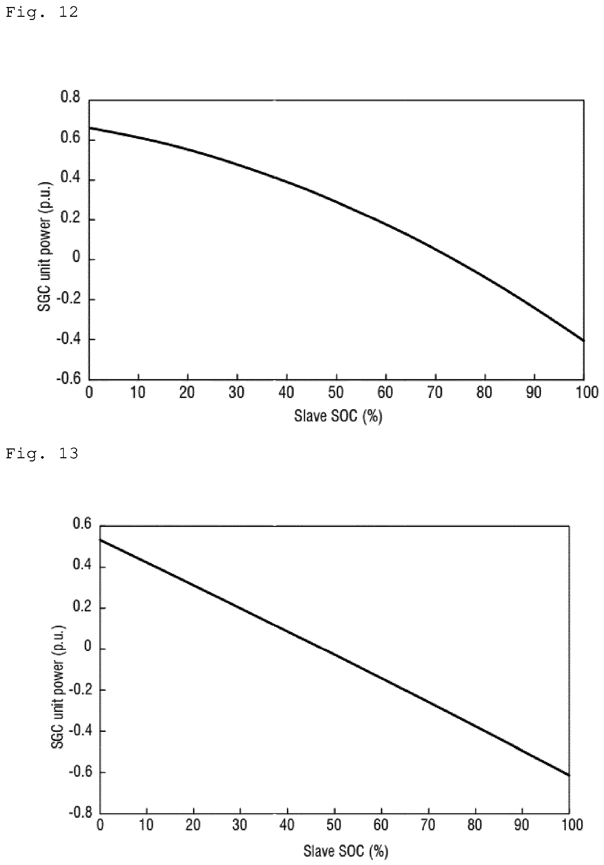

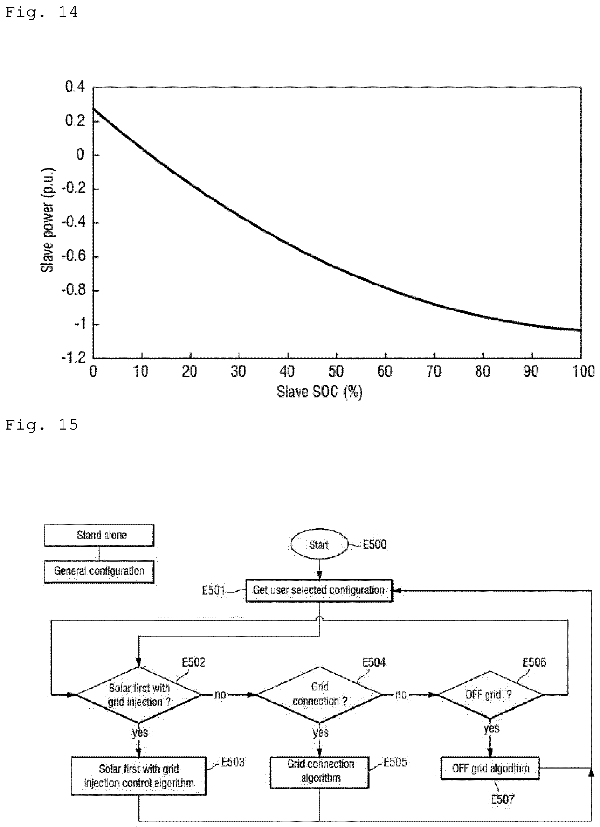

On voit sur la figure 12 la puissance de sortie du convertisseur donné pour une fréquence centrale de 50 Hz. On voit sur la figure 13 la puissance de sortie du convertisseur donné pour une fréquence centrale de 49 Hz. On voit sur la figure 14 la puissance de sortie du convertisseur donné pour une fréquence centrale de 47 Hz.

Les coefficients (a1, b1,..) définissant les lois précédentes ont été calculés de la manière suivante.

Tout d'abord, 36 points de fonctionnement (SOCcluster_master / SOCslave) ont été déterminés à l'aide d'un algorithme (cf ANNEXE) dont le critère d'optimisation répond aux contraintes : LPSP <5% et P_SGC_unit < Puissance admissible en entrée/sortie d'un convertisseur. Ces deux contraintes sont des conditions nécessaires à la stabilité statique du réseau.

Le LPSP (pour *Loss Of Power Supply Probability*) est la probabilité qu'une perte d'alimentation se produise, ce qui signifie que le système combiné (panneaux photovoltaïques et stockage d'énergie) n'est pas en mesure de fournir la charge à la demande.

Les données d'entrée de l'algorithme sont notamment les irradiances solaires au niveau des champs solaires de chaque convertisseur.

Ces 36 points de fonctionnement ont, ensuite, été scindés en 2 tableaux (cf ANNEXE) permettant de les exprimer sous la forme d'une loi discrète en fonction de la fréquence (fcentral_grid) imposée par le groupe de convertisseurs maître.

Les coefficients (a1, b1, a2, b2, a3, b3, c1, d1, c2, d2, c3, d3) sont alors déduits (par une méthode d'interpolation polynomiale) des 2 tableaux construits précédemment.

Avantageusement, on connecte les unités de traitement 7 des convertisseurs 1 à une station météo. De la sorte, la fonction de contrôle de fréquence, implémentée dans l'unité de traitement 7 de chaque convertisseur et calculant les lois de répartition des puissances entre les groupes de convertisseurs en fonction de l'état de charge des batteries, pourra être optimisée à intervalle de temps régulier (toutes les heures par exemple...) grâce à une remise à jour des données d'ensoleillement.

Les premiers coefficients ai et bi peuvent donc être remis à jour à intervalle de temps régulier en fonction de données météorologiques (en l'occurrence de données d'ensoleillement).

De même, les deuxièmes coefficients $c1$, c2, c3, d1, d2, d3 peuvent donc être remis à jour à intervalle de temps régulier en fonction de données météorologiques (en l'occurrence de données d'ensoleillement).

On s'intéresse maintenant à la gestion de puissance pour un convertisseur fonctionnant dans le mode de fonctionnement isolé (algorithme de contrôle du mode de fonctionnement isolé).

L'utilisateur peut sélectionner entre trois sous-modes de fonctionnement, chaque sous-modes de fonctionnement étant couvert par un algorithme de contrôle dédié.

En référence à la figure 15, l'algorithme de configuration générale, pour le mode de fonctionnement isolé, est mis en œuvre.

Suite à une étape de départ (étape E500), le convertisseur acquiert des paramètres de configuration représentatifs du sous-mode de fonctionnement qui a été renseigné par l'utilisateur (étape E501).

Le convertisseur vérifie si le sous-mode de fonctionnement est un sous-mode de priorité au solaire et injection sur le réseau (étape E502).

Si c'est le cas, un algorithme de contrôle avec priorité au solaire et injection sur le réseau est utilisé (étape E503).

Si ce n'est pas le cas, le convertisseur vérifie si le sous-mode de fonctionnement est un sous-mode de connexion à un réseau public (étape E504).

Si c'est le cas, un algorithme de contrôle avec connexion à un réseau public est utilisé (étape E505).

Si ce n'est pas le cas, le convertisseur vérifie si le sous-mode de fonctionnement est un sous-mode d'absence de connexion (étape E506).

Si c'est le cas, un algorithme de contrôle avec absence de connexion est utilisé (étape E507).

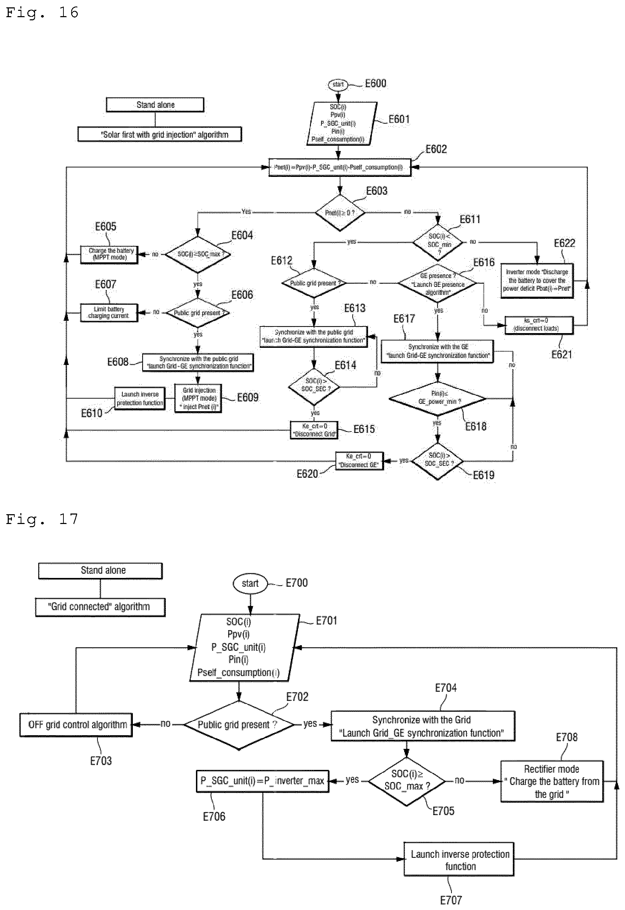

En référence à la figure 16, on décrit tout d'abord l'algorithme de contrôle avec priorité au solaire et injection sur le réseau.

Suite à une étape de départ (étape E600), le convertisseur acquiert un certain nombre de paramètres (voir figure 16) : étape E601.

Le convertisseur calcule la puissance nette produite par le panneau solaire connecté au convertisseur :

$$Pnet(i) = Ppv(i) - P\_SGC\_unit(i) - Pself\_consumption(i) : \qquad \text{étape E602.}$$

Le convertisseur vérifie si :

$$Pnet(i) \geq 0 : \text{étape E603.}$$

Si c'est le cas, le convertisseur vérifie si :

$$SOC(i) \geq SOC\_max : \text{étape E604.}$$

Si ce n'est pas le cas, le convertisseur se met en mode MPPT et charge la batterie (étape E605). L'algorithme repasse à l'étape E602.

Si c'est le cas, le convertisseur vérifie si un réseau public est présent (étape E606).

Si ce n'est pas le cas, le convertisseur limite le courant de charge de la batterie (étape E607). L'algorithme repasse à l'étape E602. Si c'est le cas, le convertisseur de synchronise avec le réseau public (étape E608).

Le convertisseur injecte sur le réseau public (mode onduleur MPPT) la puissance **Pnet(i)** (étape E609). Le convertisseur lance la fonction de protection contre le courant inverse (étape E610). L'algorithme repasse à l'étape E602.

A l'étape E603, si Pnet(i) < 0, le convertisseur vérifie si :

$$SOC(i) < SOC\_min : \text{étape E611}$$

Si c'est le cas, le convertisseur vérifie si un réseau public est présent (étape E612).

Si c'est le cas, il se synchronise avec le réseau public (étape E613).

Il vérifier alors si :

$$SOC(i) > SOC\_SEC : \text{étape E614.}$$

Si c'est le cas, il se déconnecte du réseau public :

$$Ke\_crt = 0 : \text{étape E615.}$$

L'algorithme repasse à l'étape E602.

A l'étape E614, si SOC(i) ≤ SOC_SEC, l'algorithme repasse à l'étape E613.

A l'étape E612, si le réseau public n'est pas présent, le convertisseur tente de détecter la présence d'un groupe électrogène (étape E616).

Si un groupe électrogène est présent, le convertisseur se synchronise avec ledit groupe électrogène (étape E617).

Le convertisseur vérifie si :

$$Pin(i) \leq GE\_power\_min \; : \; \texttt{étape E618.}$$

Il vérifier alors si :

$$SOC(i) > SOC\_SEC \; : \; \texttt{étape E619.}$$

Si c'est le cas, il se déconnecte du groupe électrogène :
Ke_crt = 0 (étape 620). L'algorithme repasse à l'étape E602.
Si ce n'est pas le cas, il repasse à l'étape E617.
A l'étape E616, si le groupe électrogène n'est pas présent, le convertisseur se déconnecte des abonnés :

$$Ks\_crt = 0 \; : \; \texttt{étape E621.}$$

L'algorithme repasse à l'étape E602.
A l'étape 611, si SOC(i) $\geq$ SOC_min, le convertisseur se met en mode onduleur et décharge sa batterie pour couvrir le déficit de puissance :

$$Pbat(i) = Pnet \; : \; \texttt{étape E622.}$$

L'algorithme repasse à l'étape E602.
En référence à la figure 17, on décrit maintenant l'algorithme de contrôle avec connexion au réseau public.
Suite à une étape de départ (étape E700), le convertisseur acquiert un certain nombre de paramètres (voir figure 17) : étape E701.
Le convertisseur vérifie si un réseau public est présent (étape E702).
Si ce n'est pas le cas, le convertisseur lance l'algorithme de contrôle avec absence de connexion (étape E703).
L'algorithme repasse à l'étape E701.
Si c'est le cas, le convertisseur se synchronise avec le réseau public (étape E704).
Le convertisseur vérifie alors si :

$$SOC(i) \geq SOC\_max \; : \; \texttt{étape E705.}$$

Si c'est le cas, la puissance de sortie du convertisseur est réglée de sorte que :

$$P\_SGC\_unit(i) = P\_inverter\_max \; : \; \texttt{étape E706.}$$

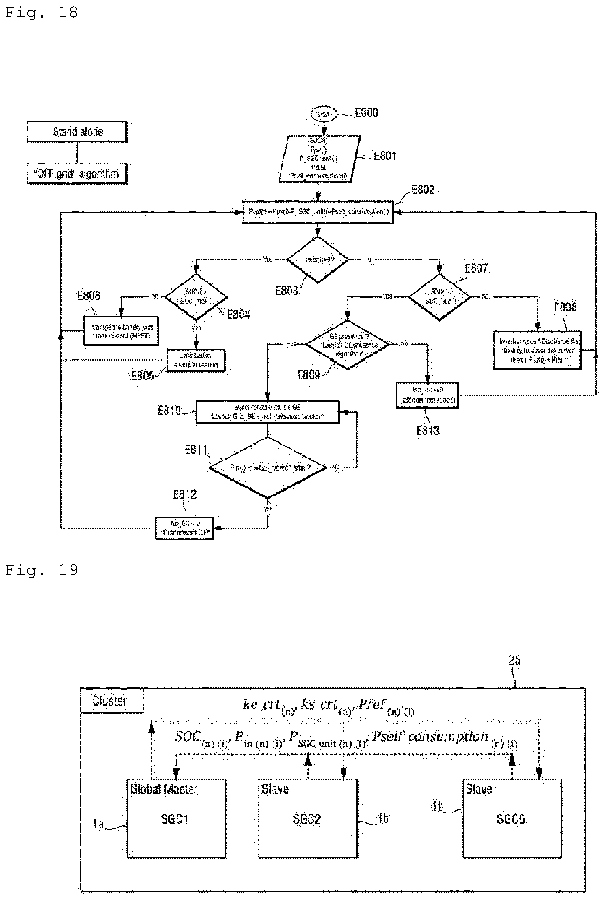

Le convertisseur lance la fonction de protection contre le courant inverse (étape E707). L'algorithme repasse à l'étape E701.
A l'étape E705, si SOC(i) < SOC_max, le convertisseur passe en mode redresseur (étape E708) ; la batterie est chargée par la puissance sur le réseau public. L'algorithme repasse à l'étape E701.
En référence à la figure 18, on décrit maintenant l'algorithme de contrôle avec absence de connexion.
Suite à une étape de départ E800, le convertisseur acquiert un certain nombre de paramètres (voir figure 18) : étape E801.
Le convertisseur calcule la puissance nette :

$$Pnet(i) = Ppv(i) - P\_SGC\_unit(i) - Pself\_consumption(i) \; : \; \texttt{étape E802.}$$

Le convertisseur vérifie si :

$$Pnet(i) \geq 0 \; : \; \texttt{étape E803.}$$

Si c'est le cas, le convertisseur vérifie si

$$SOC(i) \geq SOC\_max \; : \; \texttt{étape E804.}$$

Si c'est le cas, le convertisseur limite le courant de charge de la batterie : étape E805.

Si ce n'est pas le cas, le convertisseur charge la batterie avec le courant maximal (MPPT) : étape E806. L'algorithme repasse à l'étape E802.

A l'étape E803, si Pnet(i) < 0, le convertisseur vérifie si :

$$\mathrm{SOC(i) < SOC\_min}\ :\ \texttt{étape E807.}$$

Si ce n'est pas le cas, le convertisseur se met en mode onduleur et décharge sa batterie pour couvrir le déficit de puissance :

$$\mathrm{Pbat(i) = Pnet}\ :\ \texttt{étape E808.}$$

L'algorithme repasse à l'étape E802.

Si c'est le cas, le convertisseur vérifie la présence d'un groupe électrogène : étape E809.

Si un groupe électrogène est présent, le convertisseur se synchronise avec ledit groupe électrogène : étape E810.

Le convertisseur vérifie si :

$$\mathrm{Pin(i) \leq GE\_power\_min}\ :\ \texttt{étape E811.}$$

Si c'est le cas, il se déconnecte du groupe électrogène :
**Ke_crt** = 0 : étape E812. L' algorithme repasse à l'étape E802.

Si ce n'est pas le cas, il repasse à l'étape E810.

A l'étape E809, si le groupe électrogène n'est pas présent, le convertisseur se déconnecte des abonnés :
Ks_crt = 0 **:** étape 813. L'algorithme repasse à l'étape E802.

On s'intéresse maintenant au mode de fonctionnement en groupe.

Le groupe de convertisseurs 25 est alors isolé des autres groupes de convertisseurs. La puissance peut être échangée entre les convertisseurs du groupe de convertisseurs en fonction de leur état de charge, de la disponibilité de la puissance et de la demande des charges.

On voit sur la figure 19 les paramètres transférés au sein du groupe de convertisseurs 25 (via la liaison de communication filaire précédemment évoquée).

Le convertisseur maître de groupe 1a récupère les paramètres dynamiques des convertisseurs esclaves de groupe 1b via la liaison de communication. Puis, il contrôle la connexion et la déconnexion de chaque convertisseur esclave de groupe 1b en fonction de ces paramètres. La méthode de régulation par statisme est utilisée pour contrôler le flux de puissance dynamique au sein du groupe de convertisseurs.

Le tableau ci-dessous liste les temps d'échange de paramètres entre convertisseurs d'un groupe de convertisseurs :

| Paramètres échangés au sein du cluster | Période de communication |
|---|---|
| SOC | 1min |
| *Pin* | 20ms |
| *P_SGC_unit(i)* | 20ms |
| *Pself_consumption* | 20ms |
| *ks_crt* | Ponctuel |
| *ke_ert* | Ponctuel |
| *Pref* | 20ms |

L'utilisateur peut sélectionner entre trois sous-modes de fonctionnement, chaque sous-modes de fonctionnement étant couvert par un algorithme de contrôle dédié.

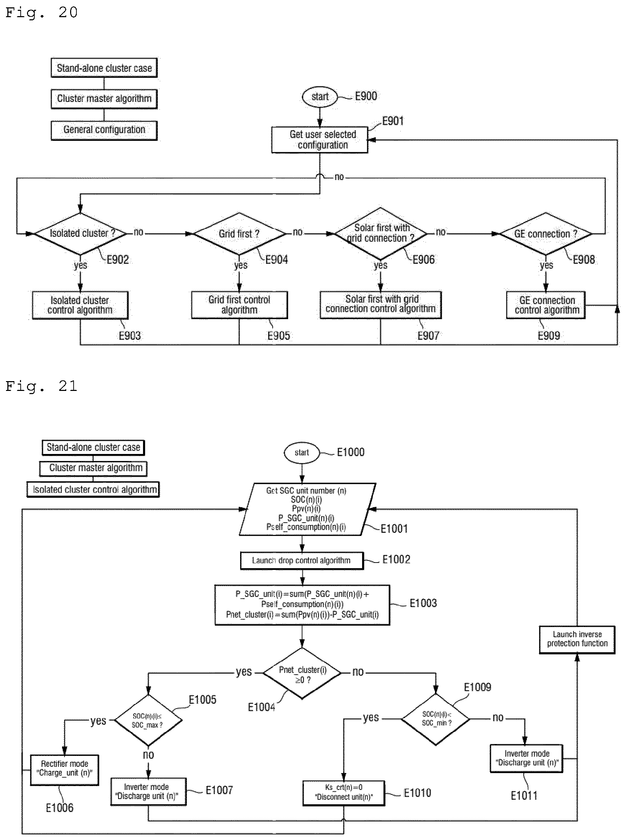

En référence à la figure 20, l'algorithme de configuration générale, pour le mode de fonctionnement en groupe, est mis en œuvre.

Suite à une étape de départ (étape E900), le convertisseur maître de groupe acquiert des paramètres de configuration représentatif du sous-mode de fonctionnement qui a été renseigné par l'utilisateur : étape E901.

Le convertisseur vérifie si le sous-mode de fonctionnement est un sous-mode de fonctionnement de groupe isolé : étape E902.

Si c'est le cas, un algorithme de contrôle pour groupe isolé est utilisé : étape E903.

Si ce n'est pas le cas, le convertisseur vérifie si le sous-mode de fonctionnement est un sous-mode de priorité à la connexion à un réseau public : étape E904.

Si c'est le cas, un algorithme de contrôle avec priorité à la connexion à un réseau public est utilisé : étape E905.

Si ce n'est pas le cas, le convertisseur vérifie si le sous-mode de fonctionnement est un sous-mode de priorité au solaire avec connexion à un réseau public : étape E906.

Si c'est le cas, un algorithme de contrôle avec priorité au solaire avec connexion à un réseau public est utilisé : étape E907.

Si ce n'est pas le cas, le convertisseur vérifie si le sous-mode de fonctionnement est un sous-mode de connexion avec un groupe électrogène : étape E908.

Si c'est le cas, un algorithme de contrôle avec connexion avec un groupe électrogène est utilisé : étape E909.

En référence à la figure 21, on décrit tout d'abord l'algorithme de contrôle pour groupe isolé, qui est mis en œuvre par le convertisseur maître de groupe.

Suite à une étape de départ E1000, le convertisseur acquiert un certain nombre de paramètres (voir figure 21) : étape E1001.

Le convertisseur met en œuvre une régulation par statisme : étape E1002.

Le convertisseur calcule :

$$P\_SGC\_unit(i) = sum(P\_SGC\_unit(n)(i) + Pself\_consumtion(n)(i))$$

et

$$Pnet\_cluster(i) = sum(Ppv(n)(i)) - P\_SGC\_unit(i) \; : \; \text{étape E1003}$$

Le convertisseur vérifie alors si :

$$Pnet\_custer(i) \geq 0 \; : \; \text{étape E1004.}$$

Si c'est le cas, le convertisseur vérifie pour chaque convertisseur n du groupe si :

$$SOC(n)(i) \leq SOC\_max \; : \; \text{étape E1005.}$$

Si c'est le cas, le convertisseur n passe en mode redresseur pour recharger sa batterie : étape E1006. Si ce n'est pas le cas, le convertisseur n passe en mode onduleur et décharge sa batterie : étape E1007. L'algorithme lance la fonction de protection contre le courant inverse : étape E1008. L'algorithme repasse à l'étape E1001.

A l'étape E1004, si **Pnet_custer(i) < 0,** le convertisseur vérifie pour chaque convertisseur n du groupe si :

$$SOC(n)(i) < SOC\_min \; : \; \text{étape E1009.}$$

Si c'est le cas, le convertisseur n se déconnecte des abonnés :

$$Ks\_crt(n) = 0 \; : \; \text{étape E1010.}$$

Si ce n'est pas le cas, le convertisseur n passe en mode onduleur et décharge sa batterie : étape E1010. L'algorithme lance la fonction de protection contre le courant inverse : étape E1008. L'algorithme repasse à l'étape E1001.

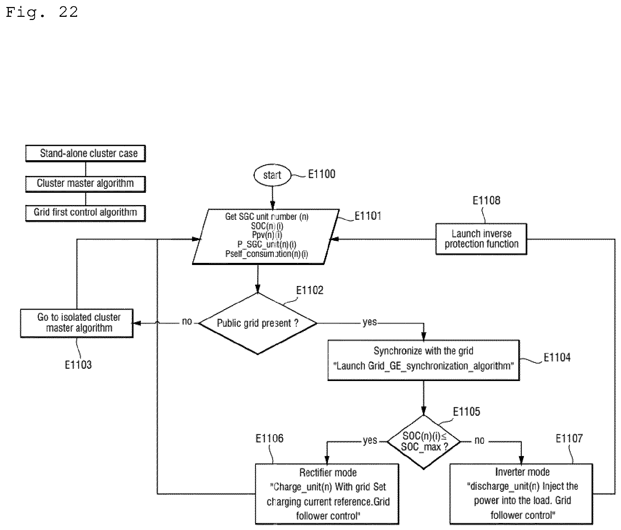

En référence à la figure 22, on décrit l'algorithme de contrôle avec priorité à la connexion à un réseau public, qui est mis en œuvre par le convertisseur maître de groupe.

Suite à une étape de départ E1100, le convertisseur acquiert un certain nombre de paramètres (voir figure 22) : étape E1101.

Le convertisseur vérifie si un réseau public est présent : étape E1102.

Si ce n'est pas le cas, l'algorithme de contrôle pour groupe isolé est utilisé : étape E1103.

Si c'est le cas, le convertisseur synchronise le groupe de convertisseurs avec le réseau public : étape E1104.

Le convertisseur vérifie pour le convertisseur n si :

$$SOC(n)(i) \leq SOC\_max \ : \ \texttt{étape E1105.}$$

Si c'est le cas, le convertisseur n passe en mode redresseur pour recharger sa batterie : étape E1106. Si ce n'est pas le cas, le convertisseur n passe en mode onduleur et décharge sa batterie : étape E1107. L'algorithme lance la fonction de protection contre le courant inverse : étape E1108. Puis, l'algorithme repasse à l'étape E1101.

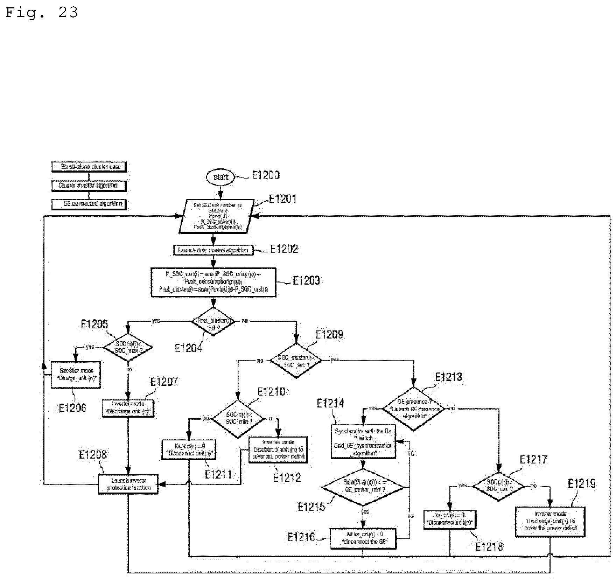

En référence à la figure 23, on décrit l'algorithme de contrôle avec connexion avec un groupe électrogène, qui est mis en œuvre par le convertisseur maître de groupe.

Suite à une étape de départ E1200, le convertisseur acquiert un certain nombre de paramètres (voir figure 23) : étape E1201.

Le convertisseur met en œuvre une régulation par statisme : étape 1202.

Le convertisseur calcule :

$$P\_SGC\_unit(i) = sum(P\_SGC\_unit(n)(i) + Pself\_consumtion(n)(i))$$

et

$$Pnet\_cluster(i) = sum(Ppv(n)(i)) - P\_SGC\_unit(i) \ : \ \texttt{étape E1203.}$$

Le convertisseur vérifie alors si :

$$Pnet\_custer(i) \geq 0 \ : \ \texttt{étape E1204.}$$

Si c'est le cas, le convertisseur vérifie pour le convertisseur n si :

$$SOC(n)(i) \leq SOC\_max \ : \ \texttt{étape E1205.}$$

Si c'est le cas, le convertisseur n passe en mode redresseur pour recharger sa batterie : étape E1206. Si ce n'est pas le cas, le convertisseur n passe en mode onduleur et décharge sa batterie : étape E1207. L'algorithme lance la fonction de protection contre le courant inverse : étape E1208. L'algorithme repasse à l'étape E1201.

A l'étape E1204, si **Pnet_custer(i) < 0,** le convertisseur vérifie si :

$$SOC\_cluster(i) < SOC\_SEC \ : \ \texttt{étape E1209}$$

Si ce n'est pas le cas, le convertisseur vérifie si :

$$SOC(n)(i) < SOC\_min \ : \ \texttt{étape E1210.}$$

Si c'est le cas, le convertisseur n se déconnecte des abonnés :
**Ks_crt(n) = 0 :** étape E1211. L'algorithme passe à l'étape E1201.

Si ce n'est pas le cas, le convertisseur n passe en mode onduleur et décharge sa batterie pour couvrir le déficit de puissance : étape E1212. L'algorithme repasse à l'étape E1208.

A l'étape E1209, si **SOC_cluster(i) < SOC_SEC,** l'algorithme vérifie la présence du groupe électrogène : étape 1213.

Si le groupe électrogène est présent, le convertisseur se synchronise avec le groupe électrogène (étape E1214) et vérifie si :

$$Sum(Pin(n)(i)) \leq GE\_power\_min \ : \ \texttt{étape E1215.}$$

Si c'est le cas, le convertisseur déconnecte du groupe électrogène tous les convertisseurs n :

$$All \ ke\_crt(n) = 0 \ : \ \texttt{étape E1216.}$$

Sinon, l'algorithme repasse à l'étape E1214.

A l'étape E1213, si le groupe électrogène n'est pas présent, le convertisseur vérifie si :

$$SOC(n)(i) < SOC\_min \; : \; \text{étape E1217.}$$

Si c'est le cas, la sortie du convertisseur n est déconnecté :

$$ks\_crt(n) = 0 \; : \; \text{étape E1218.}$$

Si ce n'est pas le cas, le convertisseur n passe en mode onduleur et décharge sa batterie pour couvrir le déficit de puissance : étape E1219. L'algorithme repasse à l'étape E1201.

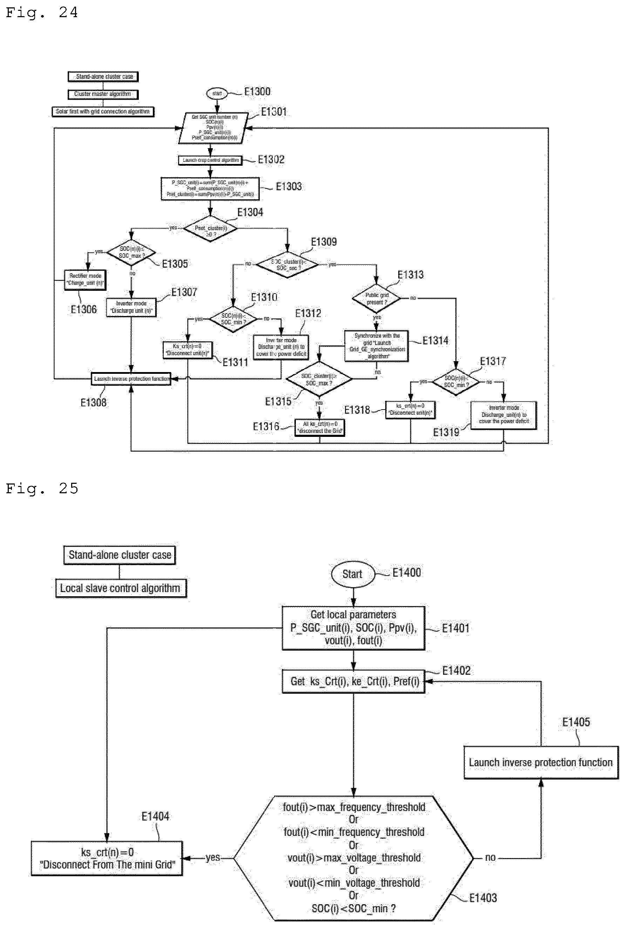

En référence à la figure 24, on décrit maintenant l'algorithme de contrôle avec priorité au solaire avec connexion à un réseau public, qui est mis en œuvre par le convertisseur maître de groupe.

Suite à une étape de départ E1300, le convertisseur acquiert un certain nombre de paramètres (voir figure 24) : E1301.

Le convertisseur met en œuvre une régulation par statisme : E1302.

Le convertisseur calcule :

$$P\_SGC\_unit(i) = sum(P\_SGC\_unit(n)(i) + Pself\_consumtion(n)(i))$$

et

$$Pnet\_cluster(i) = sum(Ppv(n)(i)) - P\_SGC\_unit(i) \; : \; \text{étape E1303.}$$

Le convertisseur vérifie alors si :

$$Pnet\_custer(i) \geq 0 \; : \; \text{étape E1304.}$$

Si c'est le cas, le convertisseur vérifie pour chaque convertisseur n si :

$$SOC(n)(i) \leq SOC\_max \; : \; \text{étape E1305.}$$

Si c'est le cas, le convertisseur n passe en mode redresseur pour recharger sa batterie : étape E1306. Si ce n'est pas le cas, le convertisseur n passe en mode onduleur et décharge sa batterie : étape E1307. L'algorithme lance la fonction de protection contre le courant inverse : étape E1308. L'algorithme repasse à l'étape E1301.

A l'étape E1304, si **Pnet_custer(i) < 0,** le convertisseur vérifie si :

$$SOC\_cluster(i) < SOC\_SEC \; : \; \text{étape E1309.}$$

Si ce n'est pas le cas, le convertisseur vérifie si :

$$SOC(n)(i) \leq SOC\_min \; : \; \text{étape E1310.}$$

Si c'est le cas, le convertisseur n se déconnecte des abonnés :
**Ks_crt(n) = 0** : étape E1311. L' algorithme passe à l'étape E1301.

Si ce n'est pas le cas, le convertisseur n passe en mode onduleur et décharge sa batterie pour couvrir le déficit de puissance : étape E1312. L'algorithme repasse à l'étape E1308.

A l'étape E1309, si **SOC_cluster(i) < SOC_SEC,** l'algorithme vérifie la présence d'un réseau public : étape E1313.

Si le réseau public est présent, le convertisseur se synchronise avec le réseau public (étape E1314) et vérifie si :

$$SOC\_cluster \geq SOC\_max \; : \; \text{étape E1315.}$$

Si c'est le cas, le convertisseur déconnecte du réseau public tous les convertisseurs n :

$$All \; ke\_crt(n) = 0 \; : \; \text{étape E1316.}$$

Sinon, l'algorithme repasse à l'étape E1314.

A l'étape E1313, si le réseau public n'est pas présent, le convertisseur vérifie si :

$$SOC(n)(i) < SOC\_min : \texttt{étape E1317.}$$

Si c'est le cas, la sortie du convertisseur n est déconnecté :

$$ks\_crt(n) = 0 : \texttt{étape E1318.}$$

Si ce n'est pas le cas, le convertisseur n passe en mode onduleur et décharge sa batterie pour couvrir le déficit de puissance : étape E1319. L'algorithme repasse à l'étape E1318.

On décrit maintenant l'algorithme de contrôle du convertisseur esclave de groupe.

Le convertisseur maître de groupe détermine la référence de puissance injectée ou absorbée par le convertisseur esclave de groupe. Les paramètres échangés au sein du groupe de convertisseur sont visibles sur la figure 19.

Ainsi, suite à une étape de départ E1400, le convertisseur esclave de groupe acquiert et analyse des paramètres : voir étapes E1401 et E1402.

Il vérifie si :

$$fout(i) > max\_frequency\_threshold$$

ou si

$$fout(i) < min\_frequency\_threshold$$

ou si

$$vout(i) > max\_voltage\_threshold$$

ou si

$$vout(i) < min\_voltage\_threshold \quad \texttt{(étape E1403).}$$

Si l'une de ces conditions est vérifiée, il se déconnecte du mini-grid :

$$ks\_crt = 0 : \texttt{étape E1404.}$$

L'algorithme passe à l'étape E1401.

A l'étape E1403, si aucune de ces conditions n'est vérifiée, il lance la fonction de protection contre le courant inverse (étape E1405).

On s'intéresse maintenant à la gestion de puissance dans le mode de fonctionnement en multi-groupes.

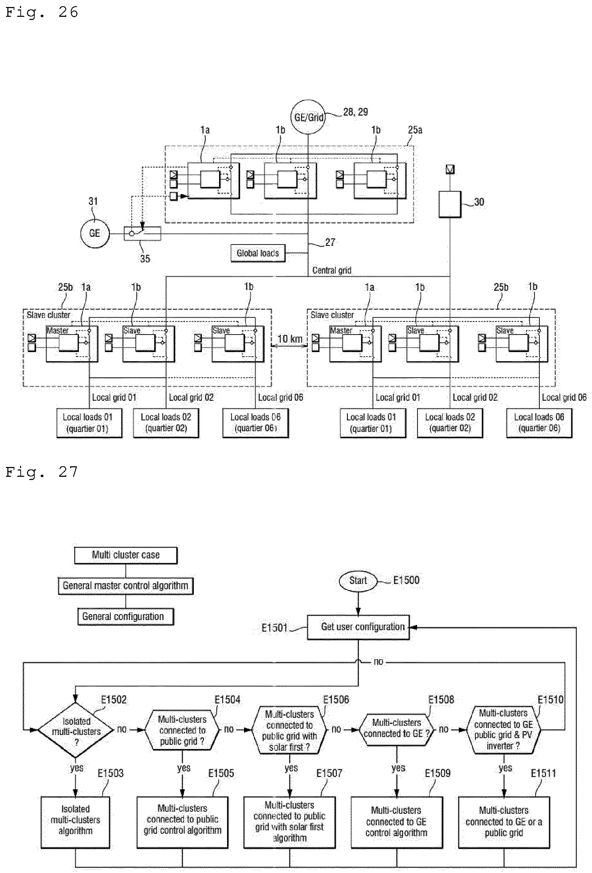

Dans ce cas, en référence à la figure 26, les groupes de convertisseurs 25 sont connectés entre eux et la puissance peut être échangée entre les différents groupes de convertisseurs sur le réseau central 27. Les algorithmes suivants gèrent l'échange d'énergie entre les différents groupes de convertisseurs et contrôlent la synchronisation des différentes sources de puissance externes telles qu'un groupe électrogène 28, un réseau public 29 et un ou des onduleurs photovoltaïques 30.

On note qu'un groupe électrogène 31 peut aussi être connecté directement sur le réseau central 27. C'est alors le groupe de convertisseurs maître 25a et, plus précisément, le convertisseur maître global 1a, qui gère la connexion dudit groupe électrogène 31 au réseau central via un contacteur externe 35.

Dans le mode de fonctionnement en multi-groupes, le groupe de convertisseurs maître 25a et, plus précisément, le convertisseur maître global, met en œuvre le procédé de synchronisation maître comprenant les étapes nominales de :

- mesurer un état de charge global maître représentatif des états de charge des batteries connectées aux convertisseurs du groupe de convertisseurs maître ;
- régler dynamiquement une fréquence centrale du réseau central en fonction de l'état de charge global maître, de manière à commander chaque convertisseur de chaque groupe de convertisseurs esclave pour que ledit convertisseur produise une puissance de sortie qui est fonction de la fréquence centrale.

Le groupe de convertisseurs maître 25a et, plus précisément, le convertisseur maître global, met en œuvre un algorithme de contrôle global défini en fonction d'au moins un paramètre de configuration, représentatif d'une configuration de connexion dans laquelle se trouve le système de convertisseurs et qui dépend d'au moins une source de puissance externe susceptible d'être connectée au groupe de convertisseurs maître, et d'un type de ladite source de puissance externe, l'algorithme de contrôle global comprenant les étapes nominales. Les sources de puissance externe comprennent un réseau de puissance externe et/ou un groupe électrogène et/ou un onduleur photovoltaïque.

Chaque convertisseur donné de chaque groupe de convertisseurs esclave 25b met en œuvre le procédé de synchronisation esclave, qui comprend les étapes de :

- mesurer une fréquence centrale du réseau central 27 ;
- produire une puissance de sortie qui est fonction de la fréquence centrale.

En référence à la figure 27, l'algorithme de configuration générale pour le mode de fonctionnement en multi-groupes, est mis en œuvre.

Suite à une étape de départ (étape E1500), le convertisseur maître global acquiert des paramètres de configuration représentatifs du sous-mode de fonctionnement qui a été renseigné par l'utilisateur (étape E1501).

Le convertisseur vérifie si les groupes de convertisseurs sont isolés (tout en étant connectés entre eux), c'est-à-dire qu'ils ne sont pas connectés à une source de puissance externe : étape E1502.

Si c'est le cas, un algorithme de contrôle de multi-groupes isolé est utilisé : étape E1503.

Si ce n'est pas le cas, le convertisseur vérifie si les groupes de convertisseurs sont connectés à un réseau public : étape E1504.

Si c'est le cas, un algorithme de contrôle de multi-groupes avec connexion à un réseau public est utilisé : étape E1505.

Si ce n'est pas le cas, le convertisseur vérifie si les groupes de convertisseurs sont connectés à un réseau public avec priorité au solaire : étape E1506.

Si c'est le cas, un algorithme de contrôle de multi-groupes avec connexion à un réseau public avec priorité au solaire est utilisé : étape E1507.

Si ce n'est pas le cas, le convertisseur vérifie si les groupes de convertisseurs sont connectés à un groupe électrogène : étape E1508

Si c'est le cas, un algorithme de contrôle de multi-groupes avec connexion à un groupe électrogène est utilisé : étape E1509.

Si ce n'est pas le cas, le convertisseur vérifie si les groupes de convertisseurs sont connectés à un groupe électrogène, un réseau public et des onduleurs photovoltaïques : étape E1510.

Si c'est le cas, un algorithme de contrôle de multi-groupes avec connexion à un groupe électrogène, un réseau public et des onduleurs photovoltaïques est utilisé : étape E1511.

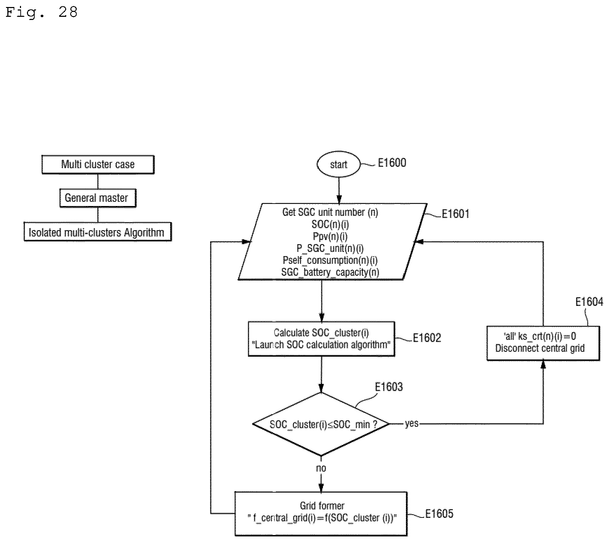

En référence à la figure 28, on décrit tout d'abord l'algorithme de contrôle de multi-groupes isolé. Suite à une étape de départ E1600, le convertisseur acquiert un certain nombre de paramètres (voir figure 28) : étape E1601.

Le convertisseur maître global calcule l'état de charge global maître représentatif des états de charge des batteries connectées aux convertisseurs du groupe de convertisseurs maître : étape E1602.

Le convertisseur vérifie si :

$$\text{SOC\_cluster}(i) \leq \text{SOC\_min} \ : \ \texttt{étape E1603.}$$

Si c'est le cas, le convertisseur déconnecte tous les groupes de convertisseurs du réseau central :

$$'\text{all}' \, \text{ks\_crt}(n)(i) = 0 \ : \ \texttt{étape E1604.}$$

Sinon, le convertisseur maître global règle la fréquence centrale du réseau central en fonction de l'état de charge global maître de manière à faire produire, par chaque convertisseur de chaque groupe de convertisseurs esclave, une puissance de sortie qui est fonction de la fréquence centrale :

**Grid former**

$$\text{"f\_central\_grid(i) = f(SOC\_cluster(i))"} : \texttt{étape E1605.}$$

L'algorithme passe à l'étape E1601.

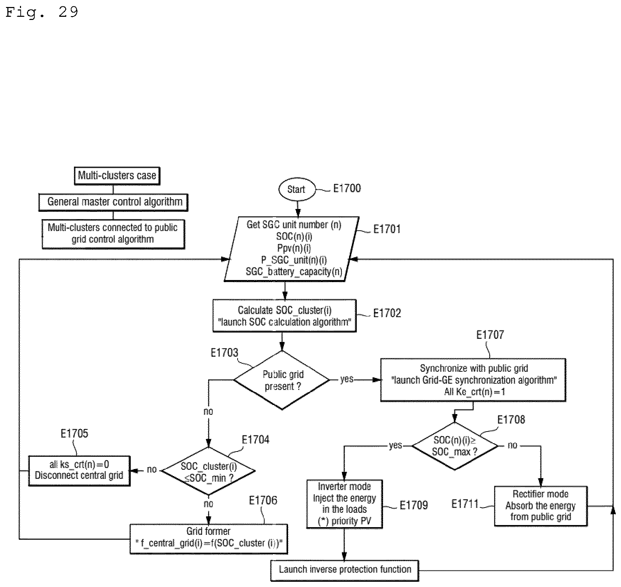

En référence à la figure 29, on décrit l'algorithme de contrôle de multi-groupes avec connexion à un réseau public. Suite à une étape de départ (étape E1700), le convertisseur acquiert un certain nombre de paramètres (voir figure 29) : étape E1701.

Le convertisseur maître global calcule l'état de charge global maître représentatif des états de charge des batteries connectées aux convertisseurs du groupe de convertisseurs maître : étape E1702.

Puis, le convertisseur vérifie si le réseau public est présent : étape E1703.

Si ce n'est pas le cas, le convertisseur maître global vérifie si :

$$\text{SOC\_cluster(i)} \leq \text{SOC\_min} : \texttt{étape E1704.}$$

Si c'est le cas, le convertisseur déconnecte tous les groupes de convertisseurs du réseau central :

$$\text{'all' ks\_crt(n)(i) = 0} : \texttt{étape E1705.}$$

Sinon, le convertisseur maître global règle la fréquence centrale du réseau central en fonction de l'état de charge global maître :

**Grid former**

$$\text{"f\_central\_grid(i) = f(SOC\_cluster(i))"} : \texttt{étape E1706.}$$

A l'étape E1703, si le réseau public est présent, le convertisseur maître global synchronise tous les convertisseurs avec le réseau public :

$$\text{'all' ke\_crt(n) = 1} : \texttt{étape E1707.}$$

Le convertisseur vérifie alors si :

$$\text{SOC(n)(i)} \geq \text{SOC\_max} : \texttt{étape E1708.}$$

Si c'est le cas, le convertisseur n passe en mode onduleur et injecte de l'énergie dans les charges (avec priorité au photovoltaïque) : étape E1709. Le convertisseur lance la fonction de protection contre le courant inverse : étape E1710. L'algorithme repasse à l'étape E1701.

Si **SOC(n)(i) < SOC\_max,** le convertisseur n passe en mode redresseur et absorbe de l'énergie du réseau public : étape E1711. L'algorithme repasse à l'étape E1701.

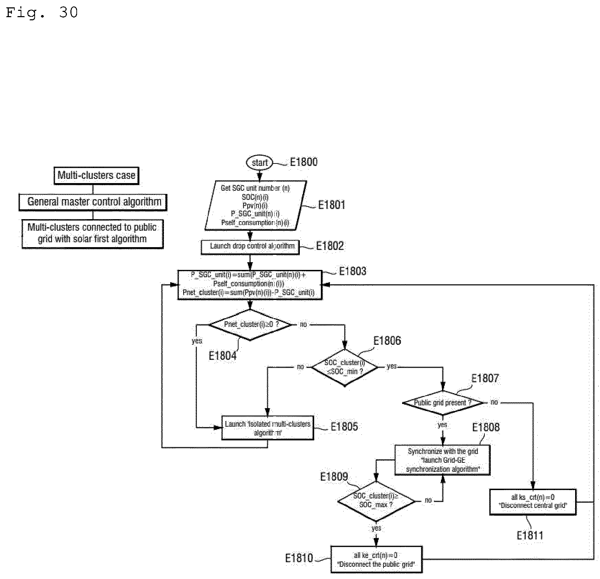

En référence à la figure 30, on décrit l'algorithme de contrôle de multi-groupes avec connexion à un réseau public avec priorité au solaire. Suite à une étape de départ E1800, le convertisseur acquiert un certain nombre de paramètres (voir figure 30) : étape E1801.

Le convertisseur maître global met en œuvre une régulation par statisme des convertisseurs : étape E1802.

Le convertisseur maître global calcule

$$\text{P\_SGC} - \text{unit(i) = sum(P\_SGC\_unit(n)(i) + Pself\_consumption(n)(i))}$$

$$\text{Pnet\_cluster(i) = sum(Ppv(n)(i)) − P\_SGC\_unit(i)} : \texttt{étape E1803.}$$

Puis, le convertisseur vérifie si :

$$\text{Pnet\_cluster(i)} \geq 0 : \texttt{étape E1804.}$$

Si c'est le cas, il lance l'algorithme de contrôle de multi-groupes isolé : étape E1805. L'algorithme repasse ensuite à l'étape E1803.

A l'étape E1804, si **Pnet\_cluster(i) < 0,** le convertisseur vérifie si :

$$SOC\_cluster(i) \leq SOC\_min \; : \; \texttt{étape E1806.}$$

Si ce n'est pas le cas, l'algorithme passe à l'étape E1805.

Si c'est le cas, le convertisseur vérifie si le réseau public est présent : étape E1807.

Si c'est le cas, il se synchronise avec le réseau public : étape E1808.

Il vérifie alors si :

$$SOC\_cluster(i) \geq SOC\_max \; : \; \texttt{étape E1809.}$$

Si c'est le cas, il déconnecte tous les convertisseurs du réseau public :

$$all \; ke\_crt(n) = 0 \; : \; \texttt{étape E1810.}$$

L'algorithme passe à l'étape E1803.

Si **SOC_cluster(i) < SOC_max,** l'algorithme repasse à l'étape E1808.

A l'étape 1807, si le réseau public n'est pas présent, le convertisseur maître global déconnecte tous les convertisseurs (du groupe de convertisseurs maître) du réseau central :

$$all \; ks\_crt(n) = 0 : \texttt{E1811.}$$

L'algorithme passe à l'étape E1803.

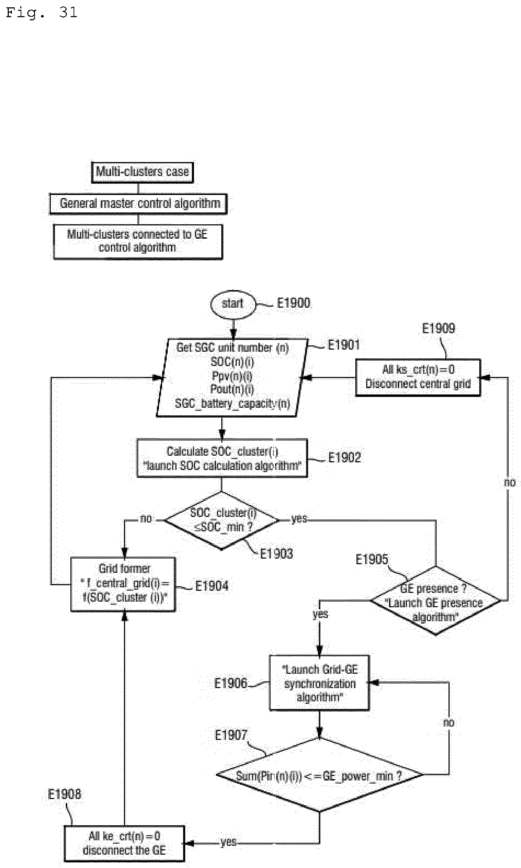

En référence à la figure 31, on décrit l'algorithme de contrôle de multi-groupes avec connexion à un groupe électrogène. Suite à une étape de départ E1900, le convertisseur acquiert un certain nombre de paramètres (voir figure 31) : étape E1901.

Le convertisseur maître global calcule l'état de charge global maître du groupe de convertisseurs maître : étape E1902.

Le convertisseur vérifie si :

$$SOC\_cluster(i) \leq SOC\_min \; : \; \texttt{étape E1903.}$$

Si ce n'est pas le cas, le convertisseur maître global règle la fréquence centrale du réseau central en fonction de l'état de charge global maître :

**Grid former**

$$\texttt{"f\_central\_grid(i)} = f(SOC\_cluster(i))". \; : \; \texttt{étape E1904.}$$

Si c'est le cas, le convertisseur vérifie si le groupe électrogène est présent : étape E1905.

Si c'est le cas, le convertisseur se synchronise avec le groupe électrogène : étape E1906.

Le convertisseur vérifie si :

$$Sum\big(Pin(n)(i)\big) \leq GE\_power\_min \; : \; \texttt{étape E1907.}$$

Si c'est le cas, et donc si les batteries sont rechargées, il déconnecte les convertisseurs du groupe électrogène :

$$all \; ke\_crt(n) = 0 \; : \; \texttt{étape E1908.}$$

L'algorithme passe à l'étape E1904.

Si ce n'est pas le cas, l'algorithme repasse à l'étape E1906.

A l'étape E1905, si le groupe électrogène n'est pas présent, le convertisseur déconnecte les convertisseurs du réseau central :

$$All \; ks\_crt(n) = 0 \; : \; \texttt{étape E1909.}$$

L'algorithme passe à l'étape E1901.

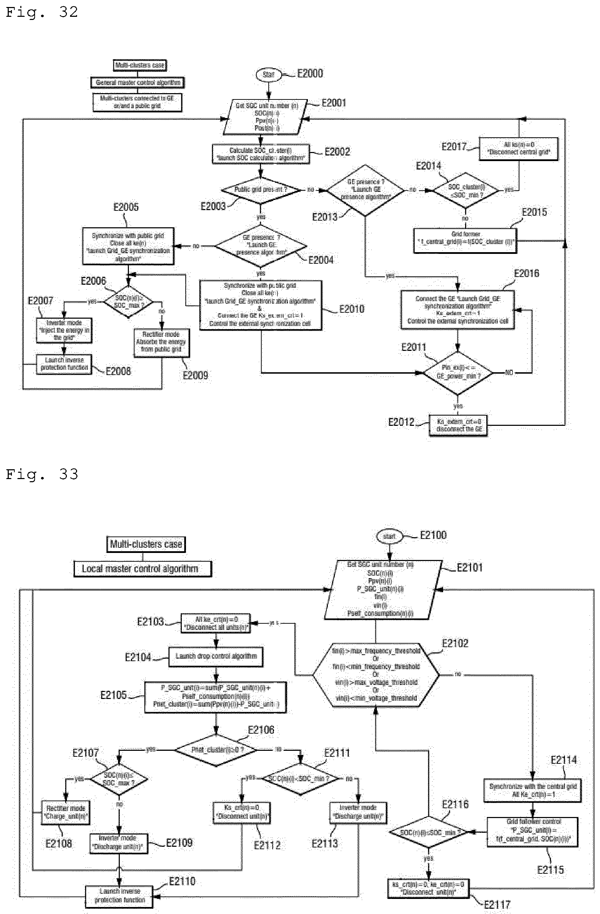

En référence à la figure 32, on décrit l'algorithme de contrôle de multi-groupes avec connexion à un groupe électrogène et/ou un réseau public. Suite à une étape de départ E2000, le convertisseur acquiert un certain nombre de paramètres (voir figure 32) : étape E2001.

Le convertisseur calcule l'état de charge global maître (étape E2002), puis vérifie si le réseau public est présent : étape E2003.

Si c'est le cas, il vérifie si le groupe électrogène est présent : étape E2004.

Si ce n'est pas le cas, il se synchronise avec le réseau public : étape E2005.

Le convertisseur vérifie si :

$$SOC(n)(i) \geq SOC\_max \; : \; \texttt{étape E2006.}$$

Si c'est le cas, il passe en mode onduleur et injecte de l'énergie dans le réseau : étape E2007. Il lance alors la fonction de protection contre le courant inverse : étape E2008.

Si ce n'est pas le cas, il passe en mode redresseur et absorbe de la puissance du réseau public : étape E2009.

A l'étape E2004, si le groupe électrogène est présent, il se synchronise avec le réseau public, puis ferme les contacteurs d'entrée, et connecte le groupe électrogène 31 au réseau central via le contacteur externe 35 : étape 2010.

Il vérifie ensuite si :

$$Pin\_ex(i) \leq GE\_power\_min \; : \; \texttt{étape E2011.}$$

Si c'est le cas, il ouvre le contacteur externe 35 et déconnecte le groupe électrogène 31 : étape E2012. L'algorithme passe à l'étape E2001.

A l'étape E2003, si le réseau public n'est pas présent, le convertisseur tente de détecter la présence du groupe électrogène : étape E2013. Si le groupe électrogène n'est pas détecté, le convertisseur vérifie si :

$$SOC\_cluster(i) \leq SOC\_min \; : \; \texttt{étape E2014.}$$

si c'est le cas, le convertisseur déconnecte tous les convertisseurs du réseau central : étape E2017.

Si ce n'est pas le cas, le convertisseur maître global règle la fréquence centrale du réseau central en fonction de l'état de charge global maître :

**Grid former**

$$\text{"f\_central\_grid(i)} = \text{f(SOC\_cluster(i))"} \; : \; \texttt{étape E2015.}$$

L'algorithme passe alors à l'étape E2001.

A l'étape E2013, si le groupe électrogène est détecté, le convertisseur connecte le groupe électrogène en fermant le contacteur externe 35 : étape E2016. Il se synchronise avec le groupe électrogène.

L'algorithme passe à l'étape E2011.

En référence à la figure 33, on s'intéresse maintenant à l'algorithme de contrôle local mis en œuvre par chaque convertisseur maître local de chaque groupe de convertisseurs esclave.

Suite à une étape de départ E2100, le convertisseur acquiert une pluralité de paramètres.

Il vérifie si :

$$fin(i) > max\_frequency\_threshold$$

ou si

$$fin(i) < min\_frequency\_threshold$$

ou si

$$vin(i) > max\_voltage\_threshold$$

ou si

$$vin(i) < min\_voltage\_threshold \text{ (étape E2102).}$$

Si l'une de ces conditions est réunie, il déconnecte tous les convertisseurs de son groupe du réseau (étape E2103). Il met alors en œuvre une régulation par statisme (étape E2104).

Le convertisseur calcule :

$$P\_SGC\_unit(i) = sum(P\_SGC\_unit(n)(i) + Pself\_consumtion(n)(i))$$

et

$$Pnet\_cluster(i) = sum(Ppv(n)(i)) - P\_SGC\_unit(i) \text{ : étape E2105.}$$

Le convertisseur vérifie alors si :

$$Pnet\_custer(i) \geq 0 \text{ : étape E2106.}$$

Si c'est le cas, le convertisseur vérifie si :

$$SOC(n)(i) \leq SOC\_max \text{ : étape E2107.}$$

Si c'est le cas, le convertisseur n passe en mode redresseur pour recharger sa batterie : étape E2108. Si ce n'est pas le cas, le convertisseur n passe en mode onduleur et décharge sa batterie : étape E2109. L'algorithme lance la fonction de protection contre le courant inverse : étape E2110.

A l'étape E2106, si **Pnet_custer(i) < 0,** le convertisseur vérifie si :

$$SOC(n)(i) \leq SOC\_min \text{ : étape E2111.}$$

Si c'est le cas, il déconnecte le convertisseur n des abonnés : étape E2112. Sinon, le convertisseur passe en mode onduleur et décharge sa batterie : étape E2113.

A l'étape 2102, si aucune condition n'est vérifiée, le convertisseur synchronise avec le réseau central tous les convertisseurs de son groupe.

**Grid follower control**

$$"P\_SGC\_unit(i) = f(f\_central\_grid, SOC(n)(i)". \text{ : étape E2114.}$$

Chaque convertisseur esclave produit une puissance de sortie en fonction de la fréquence centrale : étape E2115

Le convertisseur vérifie alors si :

$$SOC(n)(i) \leq SOC\_min \text{ : étape E2116.}$$

Si c'est le cas, il déconnecte le convertisseur n du réseau central et des abonnés : étape E2117.

On décrit maintenant un algorithme esclave, mis en œuvre par chaque convertisseur esclave.

Chaque convertisseur esclave peut prendre la décision de se déconnecter du réseau central (en cas de problème, ex chute de tension due à une demande de puissance très élevée, très faible SOC, etc..) pour continuer à alimenter ses charges locales.

Ainsi, suite à une étape de départ E2200, le convertisseur esclave acquiert et analyse des paramètres (voir étape E2201).

Il vérifie si :

$$fin(i) > max\_frequency\_threshold$$

ou si

$$\text{fin(i)} < \text{min\_frequency\_threshold}$$

ou si

$$\text{vin(i)} > \text{max\_voltage\_threshold}$$

ou si

$$\text{vin(i)} < \text{min\_voltage\_threshold} \quad \text{(étape E2102).}$$

Si l'une de ces conditions est vérifiée, il se déconnecte du réseau central. L'algorithme passe à l'étape E2203.

Si aucune de ces conditions n'est vérifiée, il se synchronise sur le réseau central en fermant son contacteur d'entrée : étape E2204.

Il produit une puissance de sortie en fonction de la fréquence centrale.

**Grid follower control**

$$\text{"P\_SGC\_unit(i)} = \text{f(f\_central\_grid, SOC(n)(i))"} \quad \text{: étape E2205}$$

Le convertisseur vérifie alors si :

$$\text{SOC(i)} \leq \text{SOC\_min} \quad \text{: étape E2206.}$$

Si c'est le cas, l'algorithme passe à l'étape E2203.

Sinon, l'algorithme passe à l'étape E2205.

Bien entendu, l'invention n'est pas limitée au mode de réalisation décrit mais englobe toute variante entrant dans le champ de l'invention telle que définie par les revendications.

## ANNEXES

La table ci-dessous contient des valeurs de la fréquence centrale du réseau central en fonction de l'état de charge global maître du groupe de convertisseurs maître.

| fcentral_grid (Hz) | 47 | 47.6 | 48.3 | 49.1 | 50 | 50 | 50 | 50.5 | 51.2 | 52 |
|---|---|---|---|---|---|---|---|---|---|---|
| $SOC_{cluster\_master}$ (%) | 10 | 20 | 30 | 40 | 50 | 60 | 70 | 80 | 90 | 100 |

La table ci-dessous contient des valeurs de la puissance de sortie de chaque convertisseur esclave (***P_SGC_unit***) (p.u.).

| $SOC_{slave}$ <br> fcentral_grid | 10% | 30% | 50% | 70% | 90% | 100% |
|---|---|---|---|---|---|---|
| 47 Hz | 0 | 0.3 | 0.6 | 1 | 1 | 1 |
| 48 Hz | -0.3 | 0.1 | 0.3 | 0.6 | 0.8 | 1 |
| 49 Hz | -0.6 | -0.3 | 0.3 | 0.6 | 0.8 | 1 |

| 50 Hz | -1 | -0.6 | 0.3 | 0.6 | 0.8 | 1 |
|-------|-----|------|------|------|------|-----|
| 51 Hz | -1 | -1 | -0.8 | -0.6 | 0.1 | 0.3 |
| 52 Hz | -1 | -1 | -1 | -0.6 | -0.3 | 0 |

Des programmes Matlab ayant permis de valider l'invention, sous fournis ci-dessous.

clear all

```
% PV data

Apv_former=4 ; % PV Surface (former)

Apv_follower=4 ; % PV Surface (follower)

rend_pv_former=0.165 ; % PV efficiency (former)

rend_pv_follower=0.165; % PV efficiency (follower)

GE=0; (pas de GE)

% Battery data

Cbat_former = 2500; % Battery capacity in Wh (former)

SOC_former_min =0.1; % Minimum state of charge of the
battery (former)

SOC_former_max =1; % Maximum state of charge of the
battery (former)

SOC_former0 =0.6; % Initial state of charge of the battery
(former)

Cbat_follower = 2500; % Battery capacity in Wh (follower)

SOC_min_follower =0.1; % Minimum state of charge of the
battery (follower)

SOC_max_follower =1; % Maximum state of charge of the
battery (follower)

SOC_0_follower =0.6; % % Initial state of charge of the
battery (follower)

% Weather and load data

load Ir2; % Irradiation measurement over one year (former)
```

```
load Ir; % Irradiation measurement over one year
(follower)

load Vwind; % wind speed measurement over one year

load Pload; % Load demand measurement over one year

Ir1=Ir2; Ir3=Ir;Time_end=1;

Point_Num=length(Ir1);

Num=1;

Time_start=0:Num*Time_end:(Point_Num/Num-1)*Num*Time_end;

i=1; j=Num; k=1;

while (i<=Point_Num)

if (j<=1);
Iradiance(k)=Ir1(i);Ws(k)=Wind_speed(i);Pload(k)=Pload(i);
Iradiance_follower(k)=Ir3(i); j=Num;k=k+1 ; else j=j-1;
end;

i=i+1;

end;

% PV power calculation

i=1;

while (i<=Point_Num/Num)

if Iradiance(i) <0

Iradiance(i)=0;

end

Ppv_former(i)= rend_pv_former*Apv_former*Iradiance(i); %PV
former calcuation

Ppv_follower(i)=
rend_pv_follower*Apv_follower*Iradiance_follower(i);% PV
follower calcuation
```

```
end

i=i+1;

end;

Excess = 0; % Accumulation of unrecovered renewable energy

Edificit= 0; % Accumulation of missing energy

LPSP =0; % Loss of power supply probability

Time_start=0:Num*Time_end:(Point_Num/Num-1)*Num*Time_end;

i=2;Eload=0;SOC_follower(1)=0.5;frequency(1)=50;P_nominal_
follower=3000;SOC_follower(1)=0.6;SOC_follower_100(1)=60;

while (i<=Point_Num/Num)

% SOC former calculation

Pbat_former(i)= Ppv_former(i)-Pload(i) ; % battery power
(former)

SOC_former(i)=SOC_former(i-
1)+Pbat_former(i)/60*Num/Cbat_former; % SOC fromer
calculation

Eload =Eload +Pload(i)/60*Num;  % Load energy calculation

if SOC_former(i)<(SOC_former_min+0.13);

if SOC_former(i)< (SOC_former_min+0.03);

Pbat_former(i)=Pbat_former(i)+GE;

SOC_former(i)=SOC_former(i-
1)+Pbat_former(i)/60*Num/Cbat_former;

end;

end;

% Central grid frequency calculation

SOC_former_100(i)=SOC_former(i)*100;
```

```
if (SOC_former_100(i)>=0 && SOC_former_100(i)<50)

frequency(i)=0.0734*SOC_former_100(i)+46.194;

elseif (SOC_former_100(i)>=50 && SOC_former_100(i)<70)

frequency(i)=-3.434e-16*SOC_former_100(i)+50;

else

frequency(i)=0.065*SOC_former_100(i)+45.35;

end

% slave power calculation

p1=5.9888e-5*frequency(i)-0.0029292;

p2=-0.0067848*frequency(i)+0.34341;

p3=-0.12873*frequency(i)+5.7748;

SOC_follower_100(i)=SOC_follower(i-1)*100;

Power_follower(i)=-1*(p1*SOC_follower_100(i-1)^2+p2*SOC_follower_100(i-1)+p3)* P_nominal_follower;

Pbat_follower(i)=Ppv_follower(i)-Power_follower(i);

SOC_follower(i)=SOC_follower(i-1)+Power_follower(i)/60*Num/Cbat_follower;% SOC follower calculation

Pbat_former(i)=Pbat_former(i)+Pbat_follower(i);

SOC_former(i)=SOC_former(i-1)+Pbat_former(i)/60*Num/Cbat_former;

if (SOC_former(i)<=0)

SOC_former(i)=0;

end

if (SOC_former(i)>1)

SOC_former(i)=1;
```

```
end

if SOC_former(i)>= SOC_former_max;

SOC_former(i)=SOC_former_max;

Excess = Excess + Pbat_former(i)/60*Num;

Exces= Excess/Eload*100;

end

if SOC_former(i)< SOC_former_min;

SOC_former(i)=SOC_former_min;

%LPSP Calcuation

Edificit = Edificit + Pbat_former(i)/60*Num;

LPSP= ((Edificit)/Eload)*100;

end

i=i+1;

        end
```

**Revendications**

1. Procédé de synchronisation maître, mis en œuvre par un groupe de convertisseurs maître (25a) appartenant à un système de convertisseurs (26) qui comporte une pluralité de groupes de convertisseurs (25) comprenant le groupe de convertisseurs maître et des groupes de convertisseurs esclaves (25b), chaque groupe de convertisseurs comprenant des convertisseurs (1) regroupés localement, chaque convertisseur étant connecté à au moins un panneau photovoltaïque (2) et à au moins une batterie (3) pour alimenter au moins un abonné,

   le groupe de convertisseurs maître comprenant au moins une sortie connectée à un réseau central (27), chaque groupe de convertisseurs esclaves comprenant au moins une entrée connectée audit réseau central,
   le procédé de synchronisation maître comprenant les étapes nominales de :

      - mesurer un état de charge global maître représentatif des états de charge des batteries connectées aux convertisseurs du groupe de convertisseurs maître (25a) ;
      - régler dynamiquement une fréquence centrale du réseau central en fonction de l'état de charge global maître, de manière à commander chaque convertisseur de chaque groupe de convertisseurs esclave (25b) pour que ledit convertisseur produise une puissance de sortie qui est fonction de la fréquence centrale.

2. Procédé de synchronisation maître selon la revendication 1, dans lequel la fréquence centrale **fcentral_grid** est telle que :

$$\text{fcentral\_grid} = \text{ai} * \text{SOC}_{\text{Cluster}_{\text{master}}} + \text{bi},$$

où :

$SOC_{Clustermaster}$ est l'état de charge global maître, et où **ai** et **bi** sont des premiers coefficients qui dépendent de l'état de charge global maître.

3. Procédé de synchronisation maître selon la revendication 2, dans lequel l'état de charge global maître est compris dans un intervalle d'états de charge prédéfini courant parmi une pluralité d'intervalles d'états de charge prédéfinis, chaque intervalle d'états de charge prédéfini étant associé à des valeurs constantes des premiers coefficients **ai** et **bi.**

4. Procédé de synchronisation maître selon l'une des revendications 2 ou 3, dans lequel les premiers coefficients **ai** et **bi** sont remis à jour à intervalle de temps régulier en fonction de données météorologiques.

5. Procédé de synchronisation maître selon l'une des revendications précédentes, dans lequel les étapes nominales sont réalisées par un convertisseur maître global (1a) appartenant au groupe de convertisseurs maître (25a).

6. Procédé de synchronisation maître selon l'une des revendications précédentes, dans lequel les étapes nominales comprennent en outre l'étape, si l'état de charge global maître est inférieur ou égal à un seuil minimal prédéfini, de déconnecter du réseau central (27) les convertisseurs (1) du groupe de convertisseurs maître (25a).

7. Procédé de synchronisation maître selon l'une des revendications précédentes, dans lequel le groupe de convertisseurs maître (25a) est agencé pour mettre en œuvre un algorithme de contrôle global défini en fonction d'au moins un paramètre de configuration, représentatif d'une configuration de connexion dans laquelle se trouve le système de convertisseurs (26) et qui dépend d'au moins une source de puissance externe susceptible d'être connectée au groupe de convertisseurs maître, et d'un type de ladite source de puissance externe, l'algorithme de contrôle global comprenant les étapes nominales.

8. Procédé de synchronisation maître selon la revendication 7, dans lequel les sources de puissance externes comprennent un réseau de puissance externe (29) et/ou un groupe électrogène (28, 31) et/ou un onduleur photovoltaïque (30).

9. Convertisseur (1a) agencé pour être connecté à au moins un panneau photovoltaïque (2) et à au moins une batterie (3) pour alimenter au moins un abonné, et comprenant une unité de traitement (7) dans laquelle est mis en œuvre le procédé de synchronisation maître selon l'une des revendications précédentes.

10. Programme d'ordinateur comprenant des instructions qui conduisent l'unité de traitement (7) du convertisseur (1a) selon la revendication 9 à exécuter les étapes du procédé de synchronisation maître selon l'une des revendications 1 à 8.

11. Support d'enregistrement lisible par ordinateur, sur lequel est enregistré le programme d'ordinateur selon la revendication 10.

12. Procédé de synchronisation esclave, mis en œuvre par un convertisseur donné d'un groupe de convertisseurs esclave (25b) appartenant à un système de convertisseurs (26) qui comporte une pluralité de groupes de convertisseurs (25) comprenant un groupe de convertisseurs maître (25a) et ledit groupe de convertisseurs esclave (25b), chaque groupe de convertisseurs comprenant des convertisseurs regroupés localement, chaque convertisseur étant connecté à au moins un panneau photovoltaïque (2) et à au moins une batterie (3) pour alimenter au moins un abonné,

le groupe de convertisseurs maître comprenant au moins une sortie connectée à un réseau central (27), le convertisseur donné comprenant au moins une entrée connectée audit réseau central,
le procédé de synchronisation esclave comprenant les étapes de :

- mesurer une fréquence centrale du réseau central ;
- produire une puissance de sortie qui est fonction de la fréquence centrale.

13. Procédé de synchronisation esclave selon la revendication 12, dans lequel la puissance de sortie est aussi fonction d'un état de charge local de la batterie connectée audit convertisseur donné.

14. Procédé de synchronisation esclave selon la revendication 13, dans lequel la puissance de sortie $P\_SGC\_unit$ est une fonction polynomiale de l'état de charge local de la batterie connectée audit convertisseur donné, ayant des coefficients qui dépendent de la fréquence centrale.

**15.** Procédé de synchronisation esclave selon la revendication 14, dans lequel la puissance de sortie *P_SGC_unit* est telle que :

$$P\_SGC\_unit = P_1 * SOC_{slave}^2 + P_2 * SOC_{slave} + P_3$$

où :
$SOC_{slave}$ est l'état de charge local du convertisseur donné, et où $P_1$, $P_2$, $P_3$ dépendent de la fréquence centrale.

**16.** Procédé de synchronisation esclave selon la revendication 15, dans lequel on a :

$$P_1 = c1 * fcentral_{grid} + d1$$

$$P_2 = c2 * fcentral_{grid} + d2$$

$$P_3 = c3 * fcentral\_grid + d3$$

où :
c1,c2,c3,d1,d2,d3 sont des deuxièmes coefficients et où *fcentral_{grid}* est la fréquence centrale.

**17.** Procédé de synchronisation esclave selon la revendication 16, dans lequel les deuxièmes coefficients *c1, c2, c3, d1, d2, d3* sont remis à jour à intervalle de temps régulier en fonction de données météorologiques.

**18.** Convertisseur (1) agencé pour être connecté à au moins un panneau photovoltaïque (2) et à au moins une batterie (3) pour alimenter au moins un abonné, et comprenant une unité de traitement (7) dans laquelle est mis en œuvre le procédé de synchronisation esclave selon l'une des revendications 12 à 17.

**19.** Programme d'ordinateur comprenant des instructions qui conduisent l'unité de traitement (7) du convertisseur (1) selon la revendication 18 à exécuter les étapes du procédé de synchronisation esclave selon l'une des revendications 12 à 17.

**20.** Support d'enregistrement lisible par ordinateur, sur lequel est enregistré le programme d'ordinateur selon la revendication 19.

**Patentansprüche**

**1.** Master-Synchronisationsverfahren, das von einer Master-Wandlergruppe (25a) ausgeführt wird, die zu einem Wandlersystem (26) gehört, das eine Mehrzahl von Wandlergruppen (25) enthält, welche die Master-Wandlergruppe sowie Slave-Wandlergruppen (25b) umfasst, wobei jede Wandlergruppe lokal gruppierte Wandler (1) umfasst, wobei jeder Wandler an zumindest ein Photovoltaikpanel (2) und an zumindest eine Batterie (3) angeschlossen ist, um zumindest einen Abnehmer zu versorgen,

wobei die Master-Wandlergruppe zumindest einen an ein zentrales Netz (27) angeschlossenen Ausgang umfasst, wobei jede Slave-Wandlergruppe zumindest einen an das zentrale Netz angeschlossenen Eingang umfasst,
wobei das Master-Synchronisationsverfahren die nominellen Schritte umfasst, dass:

- ein globaler Master-Ladezustand, welcher die Ladezustände der an die Wandler der Master-Wandlergruppe (25a) angeschlossenen Batterien darstellt, gemessen wird;
- eine Mittenfrequenz des zentralen Netzes in Abhängigkeit zu dem globalen Master-Ladezustand dynamisch so geregelt wird, dass jeder Wandler aus jeder Slave-Wandlergruppe (25b) derart angesteuert wird, dass der entsprechende Wandler eine von dieser Mittenfrequenz abhängige Ausgangsleistung erzeugt.

2. Master-Synchronisationsverfahren nach Anspruch 1, wobei für die Mittenfrequenz fcentral_grid gilt:

$$fcentral\_grid = ai * SOC_{Clustermaster} + bi,$$

wobei:
$SOC_{Clustermaster}$ der globale Master-Ladezustand ist und wobei ai und bi erste, von dem globalen Master-Ladezustand abhängige Koeffizienten sind.

3. Master-Synchronisationsverfahren nach Anspruch 2, wobei der globale Master-Ladezustand innerhalb eines aktuellen vorgegebenen Ladezustandsintervalls aus einer Mehrzahl von vorgegebenen Ladezustandsintervallen liegt, wobei jedes vorgegebene Ladezustandsintervall mit konstanten Werten der ersten Koeffizienten ai und bi verbunden ist.

4. Master-Synchronisationsverfahren nach einem der Ansprüche 2 oder 3, wobei die ersten Koeffizienten ai und bi in regelmäßigen Zeitabständen und in Abhängigkeit zu meteorologischen Daten aktualisiert werden.

5. Master-Synchronisationsverfahren nach einem der vorhergehenden Ansprüche, wobei die nominellen Schritte von einem globalen Master-Wandler (1a) ausgeführt werden, der zu der Master-Wandlergruppe (25a) gehört.

6. Master-Synchronisationsverfahren nach einem der vorhergehenden Ansprüche, wobei die nominellen Schritte ferner den Schritt umfassen, dass wenn der globale Master-Ladezustand kleiner oder gleich einem vorgegebenen Mindestschwellenwert ist, die Wandler (1) der Master-Wandlergruppe (25a) von dem zentralen Netz (27) getrennt werden.

7. Master-Synchronisationsverfahren nach einem der vorhergehenden Ansprüche, wobei die Master-Wandlergruppe (25a) dafür ausgelegt ist, einen globalen Regelalgorithmus auszuführen, der in Abhängigkeit zu zumindest einem Konfigurationsparameter definiert ist, welcher eine Verbindungskonfiguration darstellt, in der sich das Wandlersystem (26) befindet, und welcher von zumindest einer externen, an die Master-Wandlergruppe anschließbaren Leistungsquelle sowie von einer Art der externen Leistungsquelle abhängig ist, wobei der globale Regelalgorithmus die nominellen Schritte umfasst.

8. Master-Synchronisationsverfahren nach Anspruch 7, wobei die externen Leistungsquellen ein externes Leistungsnetz (29) und/oder eine Generatorgruppe (28, 31) und/oder einen Photovoltaik-Wechselrichter (30) umfassen.

9. Wandler (1a), der dafür ausgelegt ist, an zumindest ein Photovoltaikpanel (2) und an zumindest eine Batterie (3) angeschlossen zu werden, um zumindest einen Abnehmer zu versorgen, und der eine Verarbeitungseinheit (7) umfasst, in welcher das Master-Synchronisationsverfahren nach einem der vorhergehenden Ansprüche ausgeführt wird.

10. Computerprogramm, das Befehle umfasst, welche die Verarbeitungseinheit (7) des Wandlers (1a) nach Anspruch 9 dazu veranlassen, die Schritte des Master-Synchronisationsverfahrens nach einem der Ansprüche 1 bis 8 auszuführen.

11. Computerlesbares Speichermedium, auf welchem das Computerprogramm nach Anspruch 10 abgespeichert ist.

12. Slave-Synchronisationsverfahren, das von einem Wandler einer Slave-Wandlergruppe (25b) ausgeführt wird, die zu einem Wandlersystem (26) gehört, das eine Mehrzahl von Wandlergruppen (25) enthält, welche eine Master-Wandlergruppe (25a) und die Slave-Wandlergruppe (25b) umfasst, wobei jede Wandlergruppe lokal gruppierte Wandler umfasst, wobei jeder Wandler an zumindest ein Photovoltaikpanel (2) und an zumindest eine Batterie (3) angeschlossen ist, um zumindest einen Abnehmer zu versorgen,

wobei die Master-Wandlergruppe zumindest einen an ein zentrales Netz (27) angeschlossenen Ausgang umfasst, wobei der Wandler zumindest einen an das zentrale Netz angeschlossenen Eingang umfasst, wobei das Slave-Synchronisationsverfahren die Schritte umfasst, dass:

- eine Mittenfrequenz des zentralen Netzes gemessen wird;
- eine von der Mittenfrequenz abhängige Ausgangsleistung erzeugt wird.

**EP 4 203 298 B1**

13. Slave-Synchronisationsverfahren nach Anspruch 12, wobei die Ausgangsleistung auch von einem lokalen Ladezustand der an den Wandler angeschlossenen Batterie abhängig ist.

14. Slave-Synchronisationsverfahren nach Anspruch 13, wobei es sich bei der Ausgangsleistung *P_SGC_unit* um eine Polynomfunktion des lokalen Ladezustands der an den Wandler angeschlossenen Batterie mit von der Mittenfrequenz abhängigen Koeffizienten handelt.

15. Slave-Synchronisationsverfahren nach Anspruch 14, wobei für die Ausgangsleistung *P_SGC_unit* gilt:

$$P\_SGC\_unit = P_1 * SOC_{slave}^2 + P_2 * SOC_{slave} + P_3$$

wobei:
$SOC_{slave}$ der lokale Ladezustand des Wandlers ist und wobei $P_1$, $P_2$, $P_3$ von der Mittenfrequenz abhängig sind.

16. Slave-Synchronisationsverfahren nach Anspruch 15, wobei gilt:

$$P_1 = c1 * fcentral_{grid} + d1$$

$$P_2 = c2 * fcentral_{grid} + d2$$

$$P_3 = c3 * fcentral\_grid + d3$$

wobei:
*c1, c2, c3, d1, d2, d3* zweite Koeffizienten sind und wobei *fcentral$_{grid}$* die Mittenfrequenz ist.

17. Slave-Synchronisationsverfahren nach Anspruch 16, wobei die zweiten Koeffizienten *c1, c2, c3, d1, d2, d3* in regelmäßigen Zeitabständen und in Abhängigkeit zu meteorologischen Daten aktualisiert werden.

18. Wandler (1), der dafür ausgelegt ist, an zumindest ein Photovoltaikpanel (2) und an zumindest eine Batterie (3) angeschlossen zu werden, um zumindest einen Abnehmer zu versorgen, und der eine Verarbeitungseinheit (7) umfasst, in welcher das Slave-Synchronisationsverfahren nach einem der Ansprüche 12 bis 17 ausgeführt wird.

19. Computerprogramm, das Befehle umfasst, welche die Verarbeitungseinheit (7) des Wandlers (1) nach Anspruch 18 dazu veranlassen, die Schritte des Slave-Synchronisationsverfahrens nach einem der Ansprüche 12 bis 17 auszuführen.

20. Computerlesbares Speichermedium, auf welchem das Computerprogramm nach Anspruch 19 abgespeichert ist.

**Claims**

1. A master synchronization method, implemented by a master converter cluster (25a) forming part of a converter system (26) having a plurality of converter clusters (25) comprising both the master converter cluster and also slave converter clusters (25b), each converter cluster comprising converters (1) that are locally grouped together, each converter being connected to at least one photovoltaic panel (2) and to at least one battery (3) in order to power at least one subscriber;

   the master converter cluster having at least one output connected to a central grid (27), each slave converter cluster having at least one input connected to said central grid;
   the master synchronization method comprising the nominal steps of:

   · measuring a master global state of charge that is representative of the states of charge of the batteries connected to the converters of the master converter cluster (25a);
   · dynamically adjusting the frequency of the central-grid as a function of the master global state of charge, so as to control each converter of each slave converter cluster (25b) so that said converter produces output power that is a function of said central-grid frequency.

2. A master synchronization method according to claim 1, wherein the central-grid frequency **fcentral_grid** is such that:

$$\mathrm{fcentral\_grid} = \mathrm{ai} * \mathrm{SOC}_{\mathrm{Cluster_{master}}} + \mathrm{bi}$$

where: $\mathrm{SOC}_{\mathrm{Cluster_{master}}}$ is the master global state of charge, and where **ai** and **bi** are first coefficients that depend on the master global state of charge.

3. A master synchronization method according to claim 2, wherein the master global state of charge lies in a current predefined state-of-charge range selected from a plurality of predefined state-of-charge ranges, each predefined state-of-charge range being associated with respective constant values for the first coefficients **ai** and **bi.**

4. A master synchronization method according to claim 2 or claim 3, wherein the first coefficients **ai** and **bi** are updated at regular time intervals as a function of weather data.

5. A master synchronization method according to any preceding claim, wherein the nominal steps are performed by a global master converter (1a) forming part of the master converter cluster (25a).

6. A master synchronization method according to any preceding claim, wherein, if the master global state of charge is less than or equal to a predefined minimum threshold, the nominal steps further comprise the step of disconnecting the converters (1) of the master converter cluster (25a) from the central grid (27).

7. A master synchronization method according to any preceding claim, wherein the master converter cluster (25a) is arranged to implement a global control algorithm that is defined as a function of at least one configuration parameter that is representative of a connection configuration in which the converter system (26) is to be found and that depends on there being at least one external power source capable of being connected to the master converter cluster, and on a type of said external power source, with the global control algorithm including the nominal steps.

8. A master synchronization method according to claim 7, wherein the external power sources comprise an external power grid (29) and/or a generator (28, 31) and/or a photovoltaic inverter (30).

9. A converter (1a) arranged to be connected to at least one photovoltaic panel (2) and to at least one battery (3) in order to power at least one subscriber, and including a processor unit (7) in which there is implemented the master synchronization method according to any preceding claim.

10. A computer program including instructions that cause the processor unit (7) of the converter (1a) according to claim 9 to execute the steps of the master synchronization method according to any one of claims 1 to 8.

11. A computer-readable storage medium storing the computer program according to claim 10.

12. A slave synchronization method, implemented by a given converter of a slave converter cluster (25b) forming part of a converter system (26) having a plurality of converter clusters (25) comprising both a master converter cluster (25a) and also said slave converter cluster (25b), each converter cluster comprising converters that are locally grouped together, each converter being connected to at least one photovoltaic panel (2) and to at least one battery (3) in order to power at least one subscriber;

the master converter cluster having at least one output connected to a central grid (27), the given converter having at least one input connected to said central grid;
the slave synchronization method comprising the steps of:

· measuring the frequency of the central grid (i.e. the "central-grid" frequency);
· producing output power that is a function of said central-grid frequency.

13. A slave synchronization method according to claim 12, wherein the output power is also a function of a local state of charge of the battery connected to said given converter.

**14.** A slave synchronization method according to claim 13, wherein the output power ***P_SGC_unit*** is a polynomial function of the local state of charge of the battery connected to said given converter, the function having coefficients that depend on the central-grid frequency.

**15.** A slave synchronization method according to claim 14, wherein the output power ***P_SGC_unit*** is such that:

$$P\_SGC\_unit = P_1 * SOC_{slave}^2 + P_2 * SOC_{slave} + P_3$$

where: ***SOC_{slave}*** is the local state of charge of the given converter, and where ***P_1*, *P_2*, *P_3*** depend on the central-grid frequency.

**16.** A slave synchronization method according to claim 15, wherein the following applies:

$$P_1 = c1 * fcentral_{grid} + d1$$

$$P_2 = c2 * fcentral_{grid} + d2$$

$$P_3 = c3 * fcentral\_grid + d3$$

where: ***c1, c2, c3, d1, d2, d3*** are second coefficients and where ***fcentral_{grid}*** is the central-grid frequency.

**17.** A slave synchronization method according to claim 16, wherein the second coefficients ***c1, c2, c3, d1, d2, d3*** are updated at regular time intervals as a function of weather data.

**18.** A converter (1) arranged to be connected to at least one photovoltaic panel (2) and to at least one battery (3) in order to power at least one subscriber, and including a processor unit (7) in which there is implemented the slave synchronization method according to any one of claims 12 to 17.

**19.** A computer program including instructions that cause the processor unit (7) of the converter (1) according to claim 18 to execute the steps of the slave synchronization method according to any one of claims 12 to 17.

**20.** A computer-readable storage medium storing the computer program according to claim 19.

Fig. 1

Fig. 2

Fig. 3

Fig. 4

Fig. 5

General selection algorithm

Start —E0

Get user selected configuration — E1

E4
Cluster system ?
E2
Stand-alone unit ?
yes → Stand-alone control algorithm
E3

no ←

yes
Master unit ?
no → Slave unit ?
E5
E11

no

E7
Cluster master control algorithm
← no
Multi-cluster system ?
E6

Multi-cluster system ?
E12
no → Local slave control algorithm
E14

yes

yes
E9
Local master control algorithm
← no
General Master ?
E8

yes

General master control algorithm — E10

Global slave control algorithm
E13

Fig. 6

Start — E100

Get operating mode(i)
Vbat(i)
Vinv(i)
— E101

Inverter mode ?
E102
no ←
yes →
Vbat(i)≥ **Vbat_inverse**
E103
yes

no

Vinv(i)/ Vbat(i)≤
Inverse_flow_protection_limit ?
E104
yes
no →

Ks_crt=0, Ke_crt=0
"Disconnect unit"
E105

41

Fig. 7

Fig. 8

```
              ( Start )——E300
                  │
                  ▼
              ╱ fin(i) ╲——E301
         ┌──╱  Vin(i)   ╲──┐
         │  ╲          ╱   │
         │      │          │
         │      ▼          │
         │ ┌──────────────┐│
         │ │ k_contact_GE=1││——E302
         │ │"Close the dry ││
         │ │   contact"    ││
         │ └──────────────┘│
         │        │        │
         │        ▼        │          E305
         │    ╱────────╲          ┌──────────────┐
         │   ╱ f_grid_min ≤  ╲  E303 │ GE_presence=0│
         │  ╱ fin(i) ≤ f_grid_max╲─no─│"The GE is not│
         │  ╲      &       ╱      │  present"    │
         │   ╲ v_grid_min ≤╱      └──────────────┘
         │    ╲vin(i) ≤ v_grid_max
         │       ╲────╱
         │         │yes
         │         ▼
         │ ┌──────────────┐
         └─│ GE_presence=1│——E304
           │"The GE is present"
           └──────────────┘
```

Fig. 9

```
              ( Start )——E400
                  │
                  ▼
 E401 ╱ Get SGC unit numbers(n),    ╲
     ╱ get SOC(n)(i), SGC_battery_   ╲───┐
     ╲      capacity(n)              ╱   │
      ╲────────────────────────────╱     │
                  │                       │
                  ▼                       │
 E402 ┌──────────────────────────────┐   │
      │         SGC_battery_capacity(n)  │
      │ sum(i) = Σ ─────────────────── X SOC(n)(i)
      │            total_cluster_capacity │
      └──────────────────────────────┘   │
                  │                       │
                  ▼                       │
 E403 ┌──────────────────────────────┐   │
      │    SOC_clusters(i)=sum(i)/n   │   │
      └──────────────────────────────┘   │
                  │                       │
                  ▼                       │
 E404 ┌──────────────┐                   │
      │   t=t+Δt      │───────────────────┘
      └──────────────┘
```

$$sum(i) = \sum \frac{SGC\_battery\_capacity(n)}{total\_cluster\_capacity} \times SOC(n)(i)$$

Fig. 10

Fig. 11

Fig. 12

Fig. 13

Fig. 14

Fig. 15

Fig. 16

Stand alone

"Solar first with grid injection" algorithm

start — E600

E601
SOC(i)
Ppv(i)
P_SGC_unit(i)
Pin(i)
Pself_consumption(i)

E602
Pnet(i)=Ppv(i)-P_SGC_unit(i)-Pself_consumption(i)

E603
Pnet(i)≥0 ?

yes →
E604
SOC(i)≥SOC_max ?

no → E605
Charge the battery (MPPT mode)

yes → E606
Public grid present ?

no → E607
Limit battery charging current

yes → E608
Synchronize with the public grid "launch Grid-GE synchronization function"

E609
Grid injection (MPPT mode) " inject Pnet (i)"

E610
Launch inverse protection function

no (E603) →
E611
SOC(i)<SOC_min ?

yes →
E616
GE presence ? "Launch GE presence algorithm"

no →
E622
Inverter mode "Discharge the battery to cover the power deficit Pbat(i)=Pnet"

E621
Ks_crt=0 (disconnect loads)

yes (E616) →
E617
Synchronize with the GE "launch Grid-GE synchronization function"

E618
Pin(i)≤ GE_power_min ?

yes →
E619
SOC(i)> SOC_SEC ?

no (E611) →
E612
Public grid present ?

yes →
E613
Synchronize with the public grid "launch Grid-GE synchronization function"

E614
SOC(i)> SOC_SEC ?

yes → E615
Ke_crt=0 "Disconnect Grid"

no →
E620
Ke_crt=0 "Disconnect GE"

Fig. 17

Stand alone

"Grid connected" algorithm

start — E700

E701
SOC(i)
Ppv(i)
P_SGC_unit(i)
Pin(i)
Pself_consumption(i)

E702
Public grid present ?

no → E703
OFF grid control algorithm

yes →
E704
Synchronize with the Grid "Launch Grid_GE synchronization function"

E705
SOC(i)≥ SOC_max ?

yes → E706
P_SGC_unit(i)=P_inverter_max

E707
Launch inverse protection function

no → E708
Rectifier mode "Charge the battery from the grid "

47

Fig. 18

Fig. 19

Fig. 20

Fig. 21

Fig. 22

```
┌─────────────────────────┐
│  Stand-alone cluster case │
└─────────────────────────┘
┌─────────────────────────┐
│  Cluster master algorithm │
└─────────────────────────┘
┌─────────────────────────┐
│ Grid first control algorithm │
└─────────────────────────┘
```

( start )—E1100

E1108

Get SGC unit number (n)
SOC(n)(i)
Ppv(n)(i)
P_SGC_unit(n)(i)
Pself_consumption(n)(i)        —E1101

Launch inverse
protection function

Go to isolated cluster
master algorithm     ←—no—  Public grid present ?   —yes→    Synchronize with the grid
"Launch Grid_GE_synchronization_algorithm"   —E1104

E1103                          E1102

E1106                          SOC(n)(i)≤
                               SOC_max ?       E1107
            —yes→                        —no→
Rectifier mode                          Inverter mode
"Charge_unit(n) With grid Set            "discharge_unit(n) Inject the
charging current reference.Grid          power into the load. Grid
follower control"                        follower control"

E1105

Fig. 23

Fig. 24

Fig. 25

Fig. 26

Fig. 27

Fig. 28

| Multi cluster case |
|---|
| General master |
| Isolated multi-clusters Algorithm |

start — E1600

Get SGC unit number (n)
SOC(n)(i)
Ppv(n)(i)
P_SGC_unit(n)(i)
Pself_consumption(n)(i)
SGC_battery_capacity(n) — E1601

Calculate SOC_cluster(i)
"Launch SOC calculation algorithm" — E1602

E1603
SOC_cluster(i)≤SOC_min ? — yes

E1604
'all' ks_crt(n)(i)=0
Disconnect central grid

no

Grid former
" f_central_grid(i)=f(SOC_cluster (i))" — E1605

Fig. 29

Fig. 30

Multi-clusters case

General master control algorithm

Multi-clusters connected to public
grid with solar first algorithm

start — E1800

Get SGC unit number (n)
SOC(n)(i)
Ppv(n)(i)
P_SGC_unit(n)(i)
Pself_consumption(n)(i) — E1801

Launch drop control algorithm — E1802

P_SGC_unit(i)=sum(P_SGC_unit(n)(i)+
Pself_consumption(n)(i))
Pnet_cluster(i)=sum(Ppv(n)(i))-P_SGC_unit(i) — E1803

Pnet_cluster(i)≥0 ? — no

yes

E1804

E1806

SOC_cluster(i)
≤SOC_min ? — yes

no

E1807

Public grid present ? — no

yes

Launch 'Isolated multi-clusters
algorithm 'm' — E1805

E1808

Synchronize with the grid
"launch Grid-GE
synchronization algorithm"

E1809

SOC_cluster(i)≥
SOC_max ? — no

yes

all ks_crt(n)=0
"Disconnect central grid"

E1811

E1810 — all ke_crt(n)=0
"Disconnect the public grid"

Fig. 31

Fig. 32

Fig. 33

Fig. 34

```
Multi-clusters case
        │
        ▼
Global slave control algorithm
```

                                    ( Start )─── E2200

```
        vin(i)
        fin(i)
        SOC(i)              E2201
    P_SGC_unit(i)
        Ppv(i)
```

E2203  All Ke_crt(i)=0          ←── yes ──  fin(i)>max_frequency_threshold
       Disconnect From central grid                        Or                    E2202
                                            fin(i)<min_frequency_threshold
                                                           Or
            yes                             vin(i)>max_voltage_threshold
                                                           Or
                                            vin(i)<min_voltage_threshold

                                                          no

                                            Synchronize with Central grid     E2204
        E2206                               Close ke_crt(i)

    SOC(i)≤SOC_min ?  ←──          Grid follower control                E2205
                                  "P_SGC_unit(i)=f(f_central_grid, SOC(n)(i))"

              no

## RÉFÉRENCES CITÉES DANS LA DESCRIPTION

**Documents brevets cités dans la description**

- WO 2017004125 A1

- CN 106549414 A

**Littérature non-brevet citée dans la description**

- A smart control strategy for the black start of a microgrid based on PV and other auxiliary sources under islanded condition. **SUSHIL THALE et al.** PHOTOVOLTAIC SPECIALISTS CONFERENCE (PVSC), 2011 37TH IEEE. IEEE, 19 June 2011, 2454-2459